# EUROPEAN PATENT APPLICATION

(11) **EP 4 765 270 A1**
(43) Date of publication of application: **24.06.2026**
(21) Application number: 25225466.9
(22) Date of filing: 19.12.2025
(51) Int. Cl.: H01M 10/04, H01M 10/0585

(54) **LAMINATION DEVICE CAPABLE OF SIMULTANEOUSLY LAMINATING MULTIPLE SHEETS**

(30) Priority: 20.12.2024 CN 202411890729
(71) Applicant: Greensun Inc., Shenzhen, Guangdong 518110 (CN)
(72) Inventor: LU, Shuli, Guangdong 518110 (CN); WANG, Qingyi, Guangdong 518110 (CN); LUO, Yangqing, Guangdong 518110 (CN); GUA, Qingquan, Guangdong 518110 (CN); ZHU, Bainong, Guangdong 518110 (CN); TANG, Yongchang, Guangdong 518110 (CN); LE, Fazuan, Guangdong 518110 (CN); JIN, Yaolong, Guangdong 518110 (CN); HUANG, Peifeng, Guangdong 518110 (CN)
(74) Representative: De Clercq & Partners

(57) **Abstract**

A lamination device includes a rack, a positive electrode sheet die-cutting apparatus, a negative electrode sheet die-cutting apparatus, a lamination apparatus, a separator unreeling apparatus and a separator pulling apparatus. The positive electrode sheet die-cutting apparatus includes a positive electrode sheet unreeling mechanism, a positive electrode sheet V-notch punching mechanism, a positive electrode sheet cutting mechanism, a positive electrode sheet detection mechanism and a positive electrode sheet conveyor line. The negative electrode sheet die-cutting apparatus includes a negative electrode sheet unreeling mechanism, a negative electrode sheet V-notch punching mechanism, a negative electrode sheet cutting mechanism, a negative electrode sheet detection mechanism and a negative electrode sheet conveyor line. The lamination apparatus includes a lamination table. The lamination device further includes a positive electrode sheet pre-positioning apparatus, a negative electrode sheet pre-positioning apparatus, a conveying apparatus, a battery cell splitting apparatus and a discharging manipulator.

## Description

### TECHNICAL FIELD

The present disclosure relates to the technical field of battery production, in particular to a lamination device capable of simultaneously laminating multiple sheets.

### BACKGROUND

During a production process of a battery cell of a lithium battery by an existing lamination device, generally, in S1, first, a separator unreeled by a separator unreeling apparatus of the lamination device is laid on a lamination table by using a separator pulling apparatus of the lamination device; in S2, then, the separator is cut by using a separator cutting apparatus of the lamination device; in S3, then, one negative electrode sheet on a negative electrode sheet conveyor line of the lamination device is conveyed to the separator of the lamination table by using a negative electrode sheet manipulator of the lamination device; in S4, then, the separator unreeled by the separator unreeling apparatus is laid on the negative electrode sheet by using the separator pulling apparatus, and then the separator is cut by the separator cutting apparatus; in S5, one positive electrode sheet on a positive electrode sheet conveyor line is conveyed to the separator above the negative electrode sheet by using a positive electrode sheet manipulator of the lamination device; in S6, then, the separator unreeled by the separator unreeling apparatus is laid on the positive electrode sheet by using the separator pulling apparatus; and in S7, processes of steps S2-S6 are repeated, so that the battery cell can be obtained. The lamination device can produce only one single battery cell once, which reduces production efficiency and increases production costs.

### SUMMARY

To overcome disadvantages in the prior art, the present disclosure provides a lamination device capable of simultaneously laminating multiple sheets, so that the production efficiency is improved, and the production costs are reduced.

The technical solution adopted for solving the technical problem of the present disclosure is as follows.

A lamination device capable of simultaneously laminating multiple sheets includes a rack, a positive electrode sheet die-cutting apparatus, a negative electrode sheet die-cutting apparatus disposed opposite to the positive electrode sheet die-cutting apparatus front and back, a lamination apparatus, a separator unreeling apparatus, and a separator pulling apparatus, where the positive electrode sheet die-cutting apparatus includes a positive electrode sheet unreeling mechanism configured to unreel a positive electrode sheet material strip, a positive electrode sheet V-notch punching mechanism configured to perform V-notch punching on both sides of the positive electrode sheet material strip, a positive electrode sheet cutting mechanism configured to cut the positive electrode sheet material strip into positive electrode sheets, a positive electrode sheet detection mechanism configured to perform size detection and surface defect detection on the positive electrode sheets, and a positive electrode sheet conveyor line configured to convey the positive electrode sheets; the positive electrode sheet unreeling mechanism, the positive electrode sheet V-notch punching mechanism, the positive electrode sheet cutting mechanism, the positive electrode sheet detection mechanism, and the positive electrode sheet conveyor line are successively disposed at a top of the rack from left to right, the negative electrode sheet die-cutting apparatus includes a negative electrode sheet unreeling mechanism configured to unreel a negative electrode sheet material strip, a negative electrode sheet V-notch punching mechanism configured to perform V-notch punching on both sides of the negative electrode sheet material strip, a negative electrode sheet cutting mechanism configured to cut the negative electrode sheet material strip into negative electrode sheets, a negative electrode sheet detection mechanism configured to perform size detection and surface defect detection on the negative electrode sheets, and a negative electrode sheet conveyor line configured to convey the negative electrode sheets; the negative electrode sheet unreeling mechanism, the negative electrode sheet V-notch punching mechanism, the negative electrode sheet cutting mechanism, the negative electrode sheet detection mechanism, and the negative electrode sheet conveyor line are successively disposed at the top of the rack from left to right, the lamination apparatus includes a lamination table, the separator unreeling apparatus is configured to unreel a separator, the separator pulling apparatus is configured to clamp the separator and drive the separator to move backward so as to lay the separator on the lamination table, lay the separator on the negative electrode sheets of the lamination table and lay the separator on the positive electrode sheets of the lamination table, and the separator unreeling apparatus and the separator pulling apparatus are both located in front of the lamination apparatus and located above the lamination apparatus; and the lamination device further includes: a positive electrode sheet pre-positioning apparatus, slidably disposed at the top of the rack, and configured to correct and position the positive electrode sheets; a negative electrode sheet pre-positioning apparatus, slidably disposed at the top of the rack and disposed opposite to the positive electrode sheet pre-positioning apparatus front and back, and configured to correct and position the negative electrode sheets, where the lamination apparatus is located between the positive electrode sheet pre-positioning apparatus and the negative electrode sheet pre-positioning apparatus; a conveying apparatus, disposed at the top of the rack and located between the positive electrode sheet conveyor line and the negative electrode sheet conveyor line, configured to convey the positive electrode sheets on the positive electrode sheet conveyor line to the positive electrode sheet pre-positioning apparatus, configured to convey the negative electrode sheets on the negative electrode sheet conveyor line to the negative electrode sheet pre-positioning apparatus, configured to convey the positive electrode sheets on the positive electrode sheet pre-positioning apparatus to the separator of the lamination table, and configured to convey the negative electrode sheets on the negative electrode sheet pre-positioning apparatus to the separator of the lamination table, where the lamination apparatus, the positive electrode sheet pre-positioning apparatus, and the negative electrode sheet pre-positioning apparatus are all located in the conveying apparatus; a battery cell splitting apparatus, disposed at the top of the rack and located on the right of the lamination apparatus and the positive electrode sheet pre-positioning apparatus, and configured to split an integral battery cell into multiple single battery cells; and a discharging manipulator, disposed at the top of the rack and located between the lamination apparatus and the battery cell splitting apparatus, and configured to convey the integral battery cell on the lamination table to the battery cell splitting apparatus; and the lamination apparatus further includes a lamination translation linear module disposed at the top of the rack, a lamination mounting plate disposed at a top of the lamination translation linear module, and a first hot-cutting mechanism disposed at a top of the lamination mounting plate, the lamination table is disposed at the top of the lamination mounting plate, the first hot-cutting mechanism is located in front of the lamination table, and the first hot-cutting mechanism is configured to cut the separator.

Some embodiments have the following beneficial effects. In some embodiments, by disposing the positive electrode sheet unreeling mechanism, the positive electrode sheet V-notch punching mechanism, the positive electrode sheet cutting mechanism, the positive electrode sheet detection mechanism, the positive electrode sheet conveyor line, the negative electrode sheet unreeling mechanism, the negative electrode sheet V-notch punching mechanism, the negative electrode sheet cutting mechanism, the negative electrode sheet detection mechanism, the negative electrode sheet conveyor line, the separator unreeling apparatus, the separator pulling apparatus, the lamination apparatus, the positive electrode sheet pre-positioning apparatus, the negative electrode sheet pre-positioning apparatus, the conveying apparatus, the battery cell splitting apparatus and the discharging manipulator, multiple single battery cells can be produced simultaneously, so that the production efficiency is improved, and the production costs are reduced.

### BRIEF DESCRIPTION OF THE DRAWINGS

The present disclosure is further described in conjunction with the accompanying drawings and embodiments.
FIG. 1 is a top view of a lamination device capable of simultaneously laminating multiple sheets according to an embodiment of the present disclosure;
FIG. 2 is a structural schematic diagram of a positive electrode sheet V-notch punching mechanism of the lamination device as shown in FIG. 1;
FIG. 3 is a structural schematic diagram of a punching lifting driving mechanism of the positive electrode sheet V-notch punching mechanism as shown in FIG. 2;
FIG. 4 is a structural schematic diagram of a lamination apparatus of the lamination device as shown in FIG. 1;
FIG. 5 is an exploded view of the lamination apparatus as shown in FIG. 4;
FIG. 6 is a structural schematic diagram of a lamination table of the lamination apparatus after a lamination base is omitted as shown in FIG. 4;
FIG. 7 is a structural schematic diagram of a lamination table, a first hot-cutting mechanism and a second hot-cutting mechanism of the lamination apparatus as shown in FIG. 4;
FIG. 8 is a structural schematic diagram of a positive electrode sheet pre-positioning apparatus of the lamination device as shown in FIG. 1;
FIG. 9 is a structural schematic diagram of a conveying apparatus of the lamination device as shown in FIG. 1;
FIG. 10 is a structural schematic diagram of a negative electrode sheet outer suction cup manipulator of the conveying apparatus as shown in FIG. 9;
FIG. 11 is a structural schematic diagram of a negative electrode sheet inner suction cup manipulator of the conveying apparatus as shown in FIG. 9;
FIG. 12 is a structural schematic diagram of a battery cell splitting apparatus of the lamination device as shown in FIG. 1;
FIG. 13 is a structural schematic diagram of a splitting fixture of the battery cell splitting apparatus as shown in FIG. 12;
FIG. 14 is a structural schematic diagram of a splitting mechanism of the battery cell splitting apparatus as shown in FIG. 12;
FIG. 15 is an exploded view of the splitting mechanism as shown in FIG. 14;
FIG. 16 is a structural schematic diagram of a discharging manipulator of the lamination device as shown in FIG. 1; and
FIG. 17 is a structural schematic diagram of the discharging manipulator after a discharging base, a discharging translation linear module and a discharging lifting linear module are omitted as shown in FIG. 16.

### DETAILED DESCRIPTION OF THE EMBODIMENTS

The conception, specific structure and generated technical effects in the present disclosure are described clearly and completely with the embodiments and accompanying drawings so as to fully understood the objectives, features and effects of the present disclosure. Apparently, the described embodiments are merely a part rather than all of the embodiments of the present disclosure. All other embodiments obtained by those skilled in the art based on the embodiments of the present disclosure without creative efforts shall fall within the protection scope of the present disclosure. In addition, all connecting/connection relationships involved in the patent do not refer to direct connection to a single component, but may constitute a better connecting structure by adding or reducing connection auxiliary components according to specific implementations. Technical features in the present disclosure may be interactively combined without contradictory conflicts.

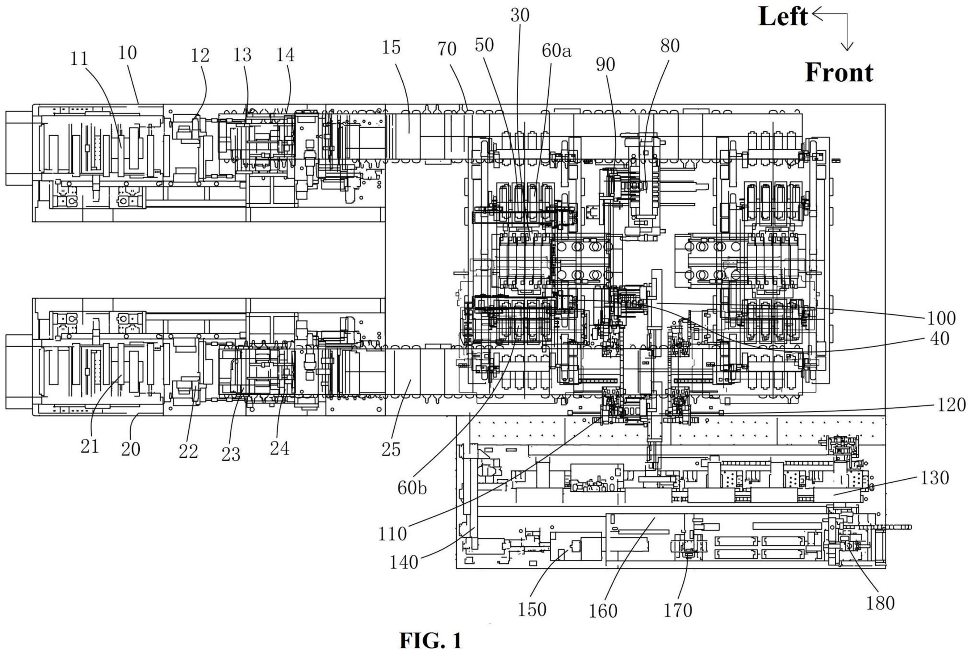

Referring to FIG. 1, a lamination device capable of simultaneously laminating multiple sheets provided in an embodiment of the present disclosure includes a rack, a positive electrode sheet die-cutting apparatus 10, a negative electrode sheet die-cutting apparatus 20 disposed opposite to the positive electrode sheet die-cutting apparatus 10 front and back, a lamination apparatus 30, a separator unreeling apparatus 40, a separator pulling apparatus 50, a positive electrode sheet pre-positioning apparatus 60a, a negative electrode sheet pre-positioning apparatus 60b, a conveying apparatus 70, a battery cell splitting apparatus 80, and a discharging manipulator 90.

The positive electrode sheet die-cutting apparatus 10 includes a positive electrode sheet unreeling mechanism 11 configured to unreel a positive electrode sheet material strip, a positive electrode sheet V-notch punching mechanism 12 configured to perform V-notch punching on both sides of the positive electrode sheet material strip, a positive electrode sheet cutting mechanism 13 configured to cut the positive electrode sheet material strip into positive electrode sheets, a positive electrode sheet detection mechanism 14 configured to perform size detection and surface defect detection on the positive electrode sheets, and a positive electrode sheet conveyor line 15 configured to convey the positive electrode sheets. The positive electrode sheet unreeling mechanism 11, the positive electrode sheet V-notch punching mechanism 12, the positive electrode sheet cutting mechanism 13, the positive electrode sheet detection mechanism 14, and the positive electrode sheet conveyor line 15 are successively disposed at a top of the rack from left to right. The negative electrode sheet die-cutting apparatus 20 includes a negative electrode sheet unreeling mechanism 21 configured to unreel a negative electrode sheet material strip, a negative electrode sheet V-notch punching mechanism 22 configured to perform V-notch punching on both sides of the negative electrode sheet material strip, a negative electrode sheet cutting mechanism 23 configured to cut the negative electrode sheet material strip into negative electrode sheets, a negative electrode sheet detection mechanism 24 configured to perform size detection and surface defect detection on the negative electrode sheets, and a negative electrode sheet conveyor line 25 configured to convey the negative electrode sheets. The negative electrode sheet unreeling mechanism 21, the negative electrode sheet V-notch punching mechanism 22, the negative electrode sheet cutting mechanism 23, the negative electrode sheet detection mechanism 24 and the negative electrode sheet conveyor line 25 are successively disposed at a top of the rack from left to right. The lamination apparatus 30 includes a lamination translation linear module (unshown in drawings) disposed at the top of the rack, a lamination mounting plate (unshown in drawings) disposed at a top of the lamination translation linear module, and a lamination table 31 disposed at a top of the lamination mounting plate. The lamination translation linear module is configured to drive the lamination mounting plate to move left and right, so that the lamination table 31 can be driven to move left and right. The separator unreeling apparatus 40 is configured to unreel a separator. The separator pulling apparatus 50 is configured to clamp the separator and drive the separator to move backward so as to lay the separator on the lamination table 31, lay the separator on multiple negative electrode sheets of the lamination table 31 and lay the separator on multiple positive electrode sheets of the lamination table 31. The positive electrode sheet pre-positioning apparatus 60a is slidably disposed at the top of the rack, and configured to correct and position multiple positive electrode sheets. The negative electrode sheet pre-positioning apparatus 60b is slidably disposed at the top of the rack and disposed opposite to the positive electrode sheet pre-positioning apparatus 60a front and back, and the negative electrode sheet pre-positioning apparatus 60b is configured to correct and position multiple negative electrode sheets. The lamination apparatus 30 is located between the positive electrode sheet pre-positioning apparatus 60a and the negative electrode sheet pre-positioning apparatus 60b. The conveying apparatus 70 is disposed at the top of the rack and located between the positive electrode sheet conveyor line 15 and the negative electrode sheet conveyor line 25, configured to convey multiple positive electrode sheets on the positive electrode sheet conveyor line 15 to the positive electrode sheet pre-positioning apparatus 60a, configured to convey multiple negative electrode sheets on the negative electrode sheet conveyor line 25 to the negative electrode sheet pre-positioning apparatus 60b, configured to convey multiple positive electrode sheets on the positive electrode sheet pre-positioning apparatus 60a to the separator of the lamination table 31, and configured to convey multiple negative electrode sheets on the negative electrode sheet pre-positioning apparatus 60b to the separator of the lamination table 31, where the lamination apparatus 30, the positive electrode sheet pre-positioning apparatus 60a, and the negative electrode sheet pre-positioning apparatus 60b are all located in the conveying apparatus 70. The separator unreeling apparatus 40 is disposed at a top of the conveying apparatus 70. The separator pulling apparatus 50 is disposed in the conveying apparatus 70. The conveying apparatus 70 is configured to drive the separator pulling apparatus 50 to move front and back. The separator unreeling apparatus 40 and the separator pulling apparatus 50 are both located in front of the lamination apparatus 30 and located above the lamination apparatus 30. The battery cell splitting apparatus 80 is disposed at the top of the rack and located on the right of the lamination apparatus 30 and the positive electrode sheet pre-positioning apparatus 60a, and configured to split an integral battery cell into multiple single battery cells. The discharging manipulator 90 is disposed at the top of the rack and located between the lamination apparatus 30 and the battery cell splitting apparatus 80, and configured to convey the integral battery cell on the lamination table 31 to the battery cell splitting apparatus 80.

The positive electrode sheet unreeling mechanism 11, the positive electrode sheet cutting mechanism 13, the positive electrode sheet detection mechanism 14, the positive electrode sheet conveyor line 15, the negative electrode sheet unreeling mechanism 21, the negative electrode sheet cutting mechanism 23, the negative electrode sheet detection mechanism 24, the negative electrode sheet conveyor line 25, the separator unreeling apparatus 40, and the separator pulling apparatus 50 are all existing structures, and details are not described herein again.

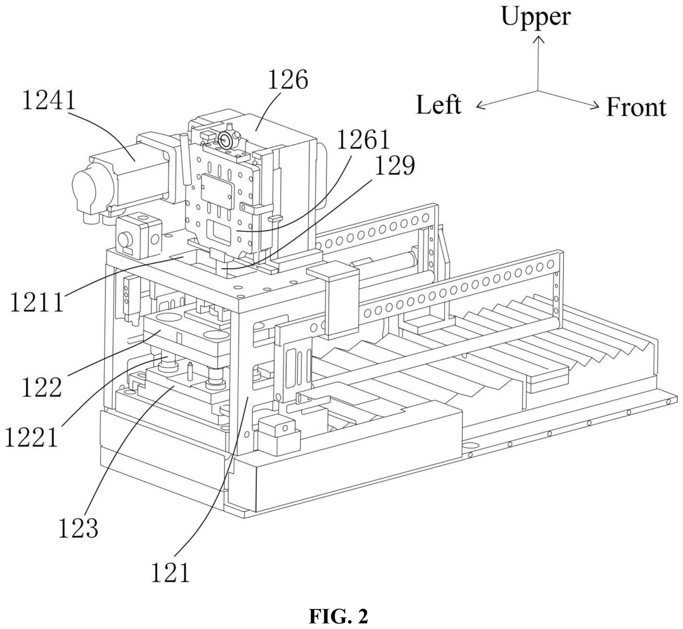

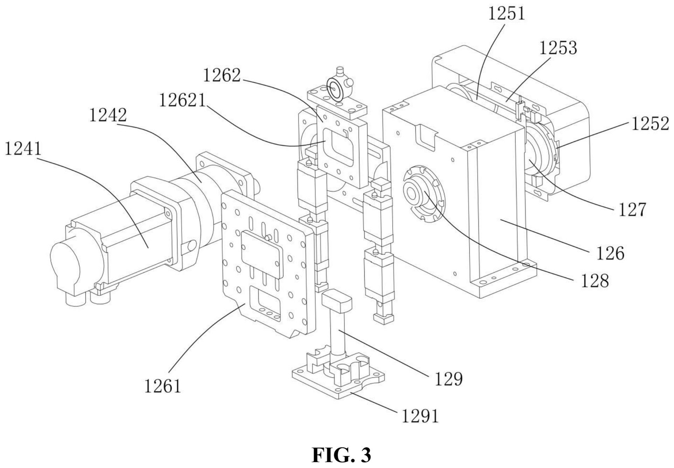

As shown in FIG. 2 and FIG. 3, the positive electrode sheet V-notch punching mechanism 12 and the negative electrode sheet V-notch punching mechanism 22 each include a punching mounting rack 121 disposed at the top of the rack, and a punching die and a punching lifting driving mechanism that are located in the punching mounting rack 121. The punching die includes an upper punching die plate 122 and a lower punching die plate 123 that are disposed opposite to each other up and down. The lower punching die plate 123 is disposed at a bottom in the punching mounting rack 121, and each of four corners of the lower punching die plate 123 and a corresponding one of four corners of the upper punching die plate 122 are respectively connected to each other by using an extension rod 1221. Two V-shaped cutters are respectively disposed on a front side and a rear side of the upper punching die plate 122. Two V-shaped slots respectively corresponding to the two V-shaped cutters are respectively formed in a top of the lower punching die plate 123. The two V-shaped cutters are respectively configured to cooperate with the two V-shaped slots. The punching lifting driving mechanism includes a punching motor 1241, a punching reducer 1242, a punching synchronous belt assembly, a punching rotating shaft 127 and a punching connecting rod 129. A punching mounting seat 126 is disposed at a top of the punching mounting rack 121. The punching motor 1241 is disposed on the punching reducer 1242. An output end of the punching motor 1241 is connected to an input end of the punching reducer 1242. The punching reducer 1242 is disposed at the back of the punching mounting seat 126 and disposed at one end of the punching mounting seat 126. The punching synchronous belt assembly is located on the right of the punching mounting seat 126. The punching mounting seat 126 is provided with a through hole running through both sides of the punching mounting seat 126. One end of the punching rotating shaft 127 is connected to an output end of the punching reducer 1242 by using the punching synchronous belt assembly, and the other end of the punching rotating shaft 127 is rotatably disposed in the through hole of the punching mounting seat 126 by using a punching bearing and connected to a roller bearing follower 128. The roller bearing follower 128 is located on the left of the punching mounting seat 126. A center of the roller bearing follower 128 is located on one side of an axis of the punching rotating shaft 127, that is, the roller bearing follower 128 is eccentrically disposed relative to the punching rotating shaft 127. The roller bearing follower 128 cooperates with a rectangular hole 12621 of a punching connecting plate 1262. A punching mounting plate 1261 is slidably disposed on one side of the punching mounting seat 126. The punching mounting plate 1261 is located on the left of the punching mounting seat 126. The punching connecting plate 1262 is disposed on one side of the punching mounting plate 1261 facing to the punching mounting seat 126. One end of the punching connecting rod 129 is disposed at a bottom of the punching mounting plate 1261, and the other end of the punching connecting rod 129 runs through a through hole 1211 in a top of the punching mounting rack 121 and is connected to a top of the upper punching die plate 122 by using a punching block 1291.

The punching synchronous belt assembly includes a punching driving wheel 1251, a punching driven wheel 1252, and a punching synchronous belt 1253 disposed on outer circumferences of the punching driving wheel 1251 and the punching driven wheel 1252. The punching driving wheel 1251 is sleeved on an outer circumference of an output end of the punching reducer 1242, and the punching driven wheel 1252 is sleeved on an outer circumference of one end of the punching rotating shaft 127. The punching motor 1241 is configured to drive the punching driving wheel 1251 to rotate by using the punching reducer 1242, so that the punching rotating shaft 127 can be driven to rotate under the action of the punching driven wheel 1252 and the punching synchronous belt 1253, and then the roller bearing follower 128 can be driven to rotate. The rotation of the roller bearing follower 128 can drive the punching connecting plate 1262 and the punching mounting plate 1261 to move up and down relative to the punching mounting seat 126, so that the punching connecting rod 129 can be driven to move up and down, and then the upper punching die plate 122 and the two V-shaped cutters can be driven to move up and down.

In actual application, the positive electrode sheet material strip can be unreeled by using the positive electrode sheet unreeling mechanism 11. The unreeled positive electrode sheet material strip can pass through a space between the upper punching die plate 122 and the lower punching die plate 123 of the positive electrode sheet V-notch punching mechanism 12. The punching motor 1241 of the positive electrode sheet V-notch punching mechanism 12 drives the upper punching die plate 122 and the two V-shaped cutters to move downward at intervals, so that the two V-shaped cutters can respectively perform V-notch punching on both sides of the positive electrode sheet material strip. Then, the positive electrode sheet material strip enters into the positive electrode sheet cutting mechanism 13. The positive electrode sheet material strip can be cut into positive electrode sheets by using the positive electrode sheet cutting mechanism 13. Then, the positive electrode sheets enter into the positive electrode sheet detection mechanism 14. Size detection and surface defect detection can be performed on the positive electrode sheets by using the positive electrode sheet detection mechanism 14. Unqualified positive electrode sheets are eliminated into a positive electrode sheet NG material box by using the positive electrode sheet detection mechanism 14, and qualified positive electrode sheets are conveyed to the positive electrode sheet conveyor line 15 by using the positive electrode sheet detection mechanism 14. Then, the positive electrode sheets can be conveyed by using the positive electrode sheet conveyor line 15. Meanwhile, the negative electrode sheet material strip can be unreeled by using the negative electrode sheet unreeling mechanism 21. The unreeled negative electrode sheet material strip can pass through a space between the upper punching die plate 122 and the lower punching die plate 123 of the negative electrode sheet V-notch punching mechanism 22. The punching motor 1241 of the negative electrode sheet V-notch punching mechanism 22 drives the upper punching die plate 122 and the two V-shaped cutters to move downward at intervals, so that the two V-shaped cutters can respectively perform V-notch punching on both sides of the negative electrode sheet material strip. Then, the negative electrode sheet material strip enters into the negative electrode sheet cutting mechanism 23. The negative electrode sheet material strip can be cut into negative electrode sheets by using the negative electrode sheet cutting mechanism 23. Then, the negative electrode sheets enter into the negative electrode sheet detection mechanism 24. Size detection and surface defect detection can be performed on the negative electrode sheets by using the negative electrode sheet detection mechanism 24. Unqualified negative electrode sheets are eliminated into a negative electrode sheet NG material box by using the negative electrode sheet detection mechanism 24, and qualified negative electrode sheets are conveyed to the negative electrode sheet conveyor line 25 by using the negative electrode sheet detection mechanism 24. Then, the negative electrode sheets can be conveyed by using the negative electrode sheet conveyor line 25.

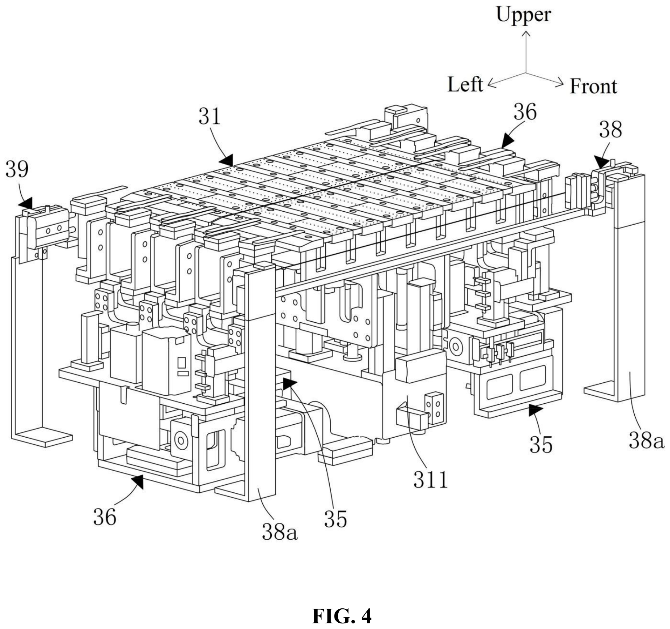

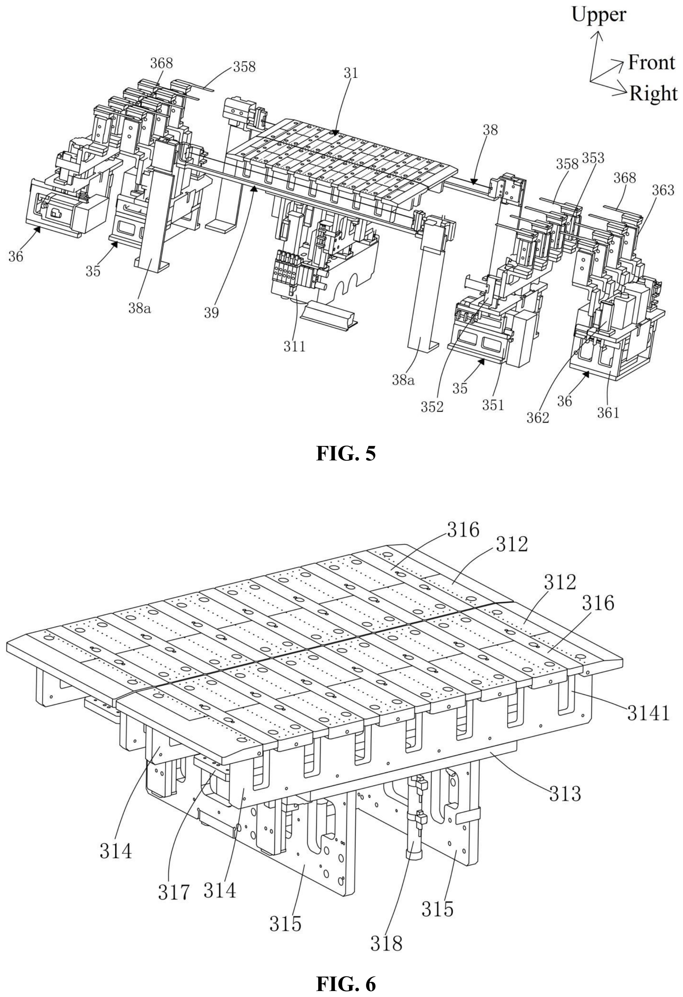

As shown in FIG. 4 to FIG. 7, the lamination table 31 includes a lamination base 311 disposed at a top of the lamination mounting plate, two lamination supporting plates 312 disposed side by side, a lamination base plate 313, and two filling assemblies. The two lamination supporting plates 312 are interconnected. Two lamination support plates 314 disposed at intervals front and back are disposed at a bottom of the lamination supporting plate 312. The two lamination support plates 314 are disposed at a top of the lamination base plate 313. Two lamination connecting plates 315 are disposed at a bottom of the lamination base plate 313. The two lamination connecting plates 315 are respectively connected to lamination connecting columns at a top of the lamination base 311. Multiple run-through holes running through a top and the bottom of the lamination supporting plate 312 are formed in the lamination supporting plate 312. The multiple run-through holes are successively disposed at intervals from left to right. The multiple run-through holes respectively correspond to the multiple lower claws 982 of the discharging manipulator 90.

The two filling assemblies respectively correspond to the two lamination supporting plates 312. The filling assembly includes multiple filling blocks 316, a filling mounting plate 317 and two filling cylinders 318. The multiple filling blocks 316 are in a one-to-one correspondence with the multiple run-through holes of the corresponding lamination supporting plate 312. The filling block 317 cooperates with the corresponding run-through hole. In a lamination process, the filling block 317 cooperates with the corresponding run-through hole. In this way, the separator, the negative electrode sheets and the positive electrode sheets can be supported jointly by using the filling blocks 317 and the lamination supporting plates 312, so that the stability is high. Multiple avoidance slots 3141 respectively corresponding to the multiple run-through holes are formed in the top of the lamination support plate 314. The multiple avoidance slots 3141 are respectively in communication with the corresponding run-through holes. The avoidance slot 3141 plays an avoidance role in a downward movement of the corresponding filling block 317. The filling mounting plate 317 is located between the two lamination support plates 314 of the corresponding lamination supporting plate 312 and located between the lamination base plate 3313 and the corresponding lamination supporting plate 312. Bottoms of the multiple filling blocks 316 are respectively connected to a top of the filling mounting plate 317. The two filling cylinders 318 are respectively disposed at a bottom of the lamination base plate 313. An output end of the filling cylinder 318 passes through a via hole of the lamination base plate 313 and is connected to a bottom of the filling mounting plate 317. The two filling cylinders 318 are configured to drive the filling mounting plate 317 to move up and down, so that the multiple filling blocks can be driven to move up and down. The multiple filling blocks 316 move downward, so that the multiple filling blocks 316 can be separated from the corresponding run-through holes. At this time, the multiple lower claws 982 of the discharging manipulator 90 can be respectively inserted into the multiple run-through holes of the two lamination supporting plates 312.

The lamination apparatus 30 further includes two first cutter mechanisms 35 and two second cutter mechanisms 36 that are disposed at the top of the lamination mounting plate. A left-and-right movement of the lamination mounting plate can drive the two first cutter mechanisms 35 and the two second cutter mechanisms 36 to move left and right. The two first cutter mechanisms 35 are disposed opposite to each other left and right. The two second cutter mechanisms 36 are disposed opposite to each other left and right. The second cutter mechanism 36 on the left side corresponds to the first cutter mechanism 35 on the left side. The second cutter mechanism 36 on the right side corresponds to the first cutter mechanism 35 on the right side. The two second cutter mechanisms 36 are respectively configured to press both sides of the separator on the lamination table 31. The two first cutter mechanisms 35 are respectively configured to press one end of the first negative electrode sheet away from a center of the lamination table 31 and one end of the last negative electrode sheet away from the center of the lamination table 31, and are respectively configured to press one end of the first positive electrode sheet away from the center of the lamination table 31 and one end of the last positive electrode sheet away from the center of the lamination table 31.

The first cutter mechanism 35 includes a first cutter seat 351 disposed at the top of the lamination mounting plate, a first left-and-right moving assembly disposed on the first cutter seat 351, a first cutter substrate 352 slidably disposed at a top of the first cutter seat 351, and multiple first cutter cylinders 353 and multiple first cutters 358 that are disposed at a top of the first cutter substrate 352. In this embodiment, there are four first cutter cylinders 353. The number of the first cutters 358 corresponds to that of the first cutter cylinders 353. The first cutter seat 351 is located below the lamination base plate 313, and the lamination base 311 is located between the first cutter seats 351 of the two first cutter mechanisms 35. The multiple first cutter cylinders 353 are successively disposed at a top of the first cutter substrate 352 at intervals from front to back, and the two lamination supporting plates 312 are located between the multiple first cutter cylinders 353 of the two first cutter mechanisms 35. The multiple first cutters 358 respectively correspond to the multiple first cutter cylinders 353 and are respectively disposed at tops of the corresponding first cutter cylinders 353, and the first cutters 358 are located above the lamination table 31. The first left-and-right moving assembly is of a structure including a motor, a lead screw nut and a synchronous belt structure. The first left-and-right moving assembly is configured to drive the first cutter substrate 352, the multiple first cutter cylinders 353 and the multiple first cutters 358 to move left and right. The first cutter cylinder 353 is configured to drive the corresponding first cutter 358 to move up and down.

The second cutter mechanism 36 includes a second cutter seat 361 disposed at the top of the lamination mounting plate, a second left-and-right moving assembly disposed on the second cutter seat 361, a second cutter substrate 362, multiple second cutter cylinders 363 and multiple second cutters 368. The numbers of the second cutter cylinders 363 and the second cutters 368 correspond to the number of the first cutter cylinders 353, and are also four respectively. The first cutter seat 351 of the first cutter mechanism 35 is located between the second cutter seat 361 and the lamination base 311 of the corresponding second cutter mechanism 36. The multiple second cutter cylinders 363 are successively disposed at a top of the second cutter substrate 362 at intervals from front to back, and each second cutter cylinder 363 is respectively located between every two adjacent first cutter cylinders 353 of the corresponding first cutter mechanism 35. The multiple second cutters 368 respectively correspond to the multiple second cutter cylinders 363 and are respectively disposed at tops of the corresponding second cutter cylinders 363, and each second cutters 368 is respectively located between every two adjacent first cutters 358. A structure of the second left-and-right moving assembly is the same as that of the first left-and-right moving assembly. The second left-and-right moving assembly is configured to drive the second cutter substrate 362, the multiple second cutter cylinders 363 and the multiple second cutters 368 to move left and right. The second cutter cylinder 363 is configured to drive the corresponding second cutter 368 to move up and down.

The lamination apparatus 30 further includes a first hot-cutting mechanism 38 and a second hot-cutting mechanism 39 that are disposed at the top of the lamination mounting plate. The left-and-right movement of the lamination mounting plate can drive the first hot-cutting mechanism 38 and the second hot-cutting mechanism 39 to move left and right. The first hot-cutting mechanism 38 and the second hot-cutting mechanism 39 are disposed opposite to each other front and back. The first hot-cutting mechanism 38 is located in front of the lamination table 31, and the second hot-cutting mechanism 39 is located at the back of the lamination table 31. The first hot-cutting mechanism 38 is configured to cut the separator and seal a front side of the integral battery cell, and the second hot-cutting mechanism 39 is configured to seal a rear side of the integral battery cell. The first hot-cutting mechanism 38 and the second hot-cutting mechanism 39 each include two hot-cutting bases 38a disposed opposite to each other left and right, two hot-cutting mounting plates 381 disposed opposite to each other left and right, two hot-cutting support plates 382 disposed opposite to each other left and right, two hot-cutting lifting cylinders 383, a separator hot-cutting wire 384, and a hot-cutting tensioning cylinder 387. The two hot-cutting bases 38a are both disposed at the top of the lamination mounting plate. The two hot-cutting mounting plates 381 are respectively disposed at tops of the two hot-cutting bases 38a. The two hot-cutting support plates 382 are respectively slidably disposed on sides of the two hot-cutting mounting plates 381 facing to the lamination table 31, and the two hot-cutting support plates 382 partially respectively protrude out of ends of the two hot-cutting mounting plates 381 close to the center of the lamination table 31. The two hot-cutting lifting cylinders 383 are respectively disposed on sides of the two hot-cutting mounting plates 381 facing to the lamination table 31, and output ends of the two hot-cutting lifting cylinders 383 are respectively connected to tops of the two hot-cutting support plates 382. The two hot-cutting lifting cylinders 383 are respectively configured to drive the two hot-cutting support plates 382 to move up and down. The separator hot-cutting wire 384 is located below a top of the lamination table 31. One end of the separator hot-cutting wire 384 is provided with a first hot-cutting block 385, and the other end of the separator hot-cutting wire 384 is provided with a second hot-cutting block 386. The lamination table 31 is located between the first hot-cutting block 385 and the second hot-cutting block 386. The first hot-cutting block 385 is disposed on one side of one of the hot-cutting support plates 382 facing to the lamination table 31 by using a hot-cutting transfer plate 3821. The second hot-cutting block 386 is connected to an output end of the hot-cutting tensioning cylinder 387, and the hot-cutting tensioning cylinder 387 is disposed on one side of the other hot-cutting support plate 382 facing to the lamination table 31. The hot-cutting tensioning cylinder 387 is configured to drive the second hot-cutting block 386 to move left and right. Up-and-down movements of the two hot-cutting support plates 382 can drive the hot-cutting transfer plate 3821, the first hot-cutting block 385, the second hot-cutting block 386, the hot-cutting tensioning cylinder 387 and the separator hot-cutting wire 384 to move up and down. One end and the other end of the separator hot-cutting wire 384 are respectively configured to be electrically connected to a control system, so that power can be supplied to the separator hot-cutting wire 384 by using the control system. The separator hot-cutting wire 384 is heated after being powered on. The separator hot-cutting wire 384 is configured to cut the separator and iron an edge of the separator. A left-and-right movement of the second hot-cutting block 386 can drive the other end of the separator hot-cutting wire 384 to move left and right, so that the separator hot-cutting wire 384 can be tensioned. When the separator is cut by using the separator hot-cutting wire 384, a case of an uneven incision may be avoided, so that the quality of the integral battery cell is improved.

In this embodiment, the first hot-cutting block 385 of the first hot-cutting mechanism 38 is disposed on one side of the hot-cutting support plate 382 located on the left side close to the lamination table 31 by using the hot-cutting transfer plate 3821. The hot-cutting tensioning cylinder 387 of the first hot-cutting mechanism 38 is disposed on one side of the hot-cutting support plate 382 located on the right side close to the lamination table 31. The first hot-cutting block 385 of the second hot-cutting mechanism 39 is disposed on one side of the hot-cutting support plate 382 located on the right side close to the lamination table 31 by using the hot-cutting transfer plate 3821. The hot-cutting tensioning cylinder 387 of the second hot-cutting mechanism 39 is disposed on one side of the hot-cutting support plate 382 located on the left side close to the lamination table 31.

During actual application, in S1, first, the separator is unreeled by the separator unreeling apparatus 40, the unreeled separator is clamped by using the separator pulling apparatus 50, and then the separator pulling apparatus 50 is driven to move backward by using two multi-rotor linear motors 72, so that the separator can be driven to move backward by using the separator pulling apparatus 50 so as to lay the separator on two lamination supporting plates 312 and the multiple filling blocks 316 of the lamination table 31, and a first separator of the integral battery cell is formed. In S2, then, the multiple corresponding second cutters 368 are respectively driven to move toward a direction of the lamination table 31 by using the second left-and-right moving assemblies of the two second cutter mechanisms 36 until the second cutters 368 of the two second cutter mechanisms 36 are respectively located above both sides of the first separator, and then the corresponding second cutters 368 are respectively driven to move downward by using the second cutter cylinders 363, so that both sides of the first separator can be respectively pressed by using the multiple second cutters 368 of the two second cutter mechanisms 36. In S3, then, the separator hot-cutting wire 384 is driven to move upward by using the two hot-cutting lifting cylinders 383 of the first hot-cutting mechanism 38, so that the first separator can be cut by using the separator hot-cutting wire 384, then the separator hot-cutting wire 384 is driven to move downward to an initial position by using the two hot-cutting lifting cylinders 383, then the first separator is released by using the separator pulling apparatus 50, and the separator pulling apparatus 50 is driven to move forward to an initial position by using the two multi-rotor linear motors 72.

In S4, then, the multiple negative electrode sheets, such as four negative electrode sheets, on the negative electrode sheet pre-positioning apparatus 60a are absorbed by using the conveying apparatus 70, and the multiple negative electrode sheets are placed on the first separator of the lamination table 31, where the multiple negative electrode sheets are successively disposed from left to right, and the first negative electrode sheet and the last negative electrode sheet do not cover both sides of the first separator. Then, the multiple corresponding first cutters 358 are respectively driven to move toward the direction of the lamination table 31 by using the first left-and-right moving assemblies of the two first cutter mechanisms 35 until the multiple first cutters 358 of the two first cutter mechanisms 35 are respectively located above one end of the first negative electrode sheet away from the center of the lamination table 31 and above one end of the last negative electrode sheet away from the center of the lamination table 31, and then the corresponding first cutters 358 are respectively driven to move downward by using the first cutter cylinders 353, so that one end of the first negative electrode sheet away from the center of the lamination table 31 and one end of the last negative electrode sheet away from the center of the lamination table 31 can be respectively pressed by using the multiple first cutters 358 of the two first cutter mechanisms 35. Meanwhile, the corresponding second cutters 368 are respectively driven to move upward by using the second cutter cylinders 363 of the two second cutter mechanisms 36 so that the multiple second cutters 368 of the two second cutter mechanisms 36 are separated from both sides of the first separator, and then the multiple corresponding second cutters 368 are respectively driven to move toward the direction of the lamination table 31 to initial positions by using the second left-and-right moving assemblies of the two second cutter mechanisms 36 so that the multiple second cutters 368 of the two second cutter mechanisms 36 are respectively removed out of the first negative electrode sheet and the first separator and removed out of the last separator and the first separator.

In S5, the unreeled separator is clamped by using the separator pulling apparatus 50, and then the separator pulling apparatus 50 is driven to move backward by using two multi-rotor linear motors 72, so that the separator can be driven to move backward by using the separator pulling apparatus 50 so as to lay the separator on the multiple negative electrode sheets of the lamination table 31, and a second separator of the integral battery cell is formed. In S6, then, both sides of the second separator are respectively pressed by using the two second cutter mechanisms 36, and actions in this step are the same as those in step S2. Meanwhile, the corresponding first cutters 358 are respectively driven to move upward by using the first cutter cylinders 353 of the two first cutter mechanisms 35 so that the multiple first cutters 358 of the two first cutter mechanisms 35 are respectively separated from one end of the first negative electrode sheet away from the center of the lamination table 31 and one end of the last negative electrode sheet away from the center of the lamination table 31, and then the multiple corresponding first cutters 358 are respectively driven to move toward the direction of the lamination table 31 to initial positions by using the first left-and-right moving assemblies of the two first cutter mechanisms 35 so that the multiple first cutters 358 of the two first cutter mechanisms 35 are respectively removed out of the last negative electrode sheet and the second separator and removed out of the last negative electrode sheet and the second separator. In S7, actions in this step are the same as those in step 3. In S8, then, the multiple positive electrode sheets, such as four positive electrode sheets, on the positive electrode sheet pre-positioning apparatus 60b are absorbed by using the conveying apparatus 70, and the multiple positive electrode sheets are placed on the second separator of the lamination table 31, where the multiple positive electrode sheets are successively disposed from left to right, and each positive electrode sheet respectively correspond to one negative electrode sheet. Then, one end of the first positive electrode sheet away from the center of the lamination table 31 and one end of the last positive electrode sheet away from the center of the lamination table 31 are respectively pressed by using the two first cutter mechanisms 35. Actions in this step are the same as those in step S4. In S9, the unreeled separator is clamped by using the separator pulling apparatus 50, and then the separator pulling apparatus 50 is driven to move backward by using two multi-rotor linear motors 72, so that the separator can be driven to move backward by using the separator pulling apparatus 50 so as to lay the separator on the multiple positive electrode sheets of the lamination table 31, and a third separator of the integral battery cell is formed. In S10, then, both sides of the third separator are respectively pressed by using the two second cutter mechanisms 36, and actions in this step are the same as those in step S2. Meanwhile, the corresponding first cutters 358 are respectively driven to move upward by using the first cutter cylinders 353 of the two first cutter mechanisms 35 so that the multiple first cutters 358 of the two first cutter mechanisms 35 are respectively separated from one end of the first positive electrode sheet away from the center of the lamination table 31 and one end of the last positive electrode sheet away from the center of the lamination table 31, and then the multiple corresponding first cutters 358 are respectively driven to move toward the direction of the lamination table 31 to initial positions by using the first left-and-right moving assemblies of the two first cutter mechanisms 35 so that the multiple first cutters 358 of the two first cutter mechanisms 35 are respectively removed out of the last positive electrode sheet and the third separator and removed out of the last positive electrode sheet and the third separator. In S10, a process of steps S4-S9 is repeated until the last separator is laid on the multiple positive electrode sheets on the last layer. In this way, the integral battery cell is obtained. In S11, the separator hot-cutting wire 384 is driven to move upward by using the two hot-cutting lifting cylinders 383 of the first hot-cutting mechanism 38 and the second hot-cutting mechanism 39, during the separator hot-cutting wires 384 of the first hot-cutting mechanism 38 and the second hot-cutting mechanism 38 move upward, edges of the front side and the rear side of all separators of the integral battery cell can be ironed by using the separator hot-cutting wires 384 of the first hot-cutting mechanism 38 and the second hot-cutting mechanism 39 so that edges of the front side and the rear side of all separators of the integral battery cell are adhered together. In this way, the front side and the rear side of the integral battery cell are sealed. Then, the separator hot-cutting wire 384 is driven to move downward to the initial position by using the two hot-cutting lifting cylinders 383 of the first hot-cutting mechanism 38 and the second hot-cutting mechanism 39.

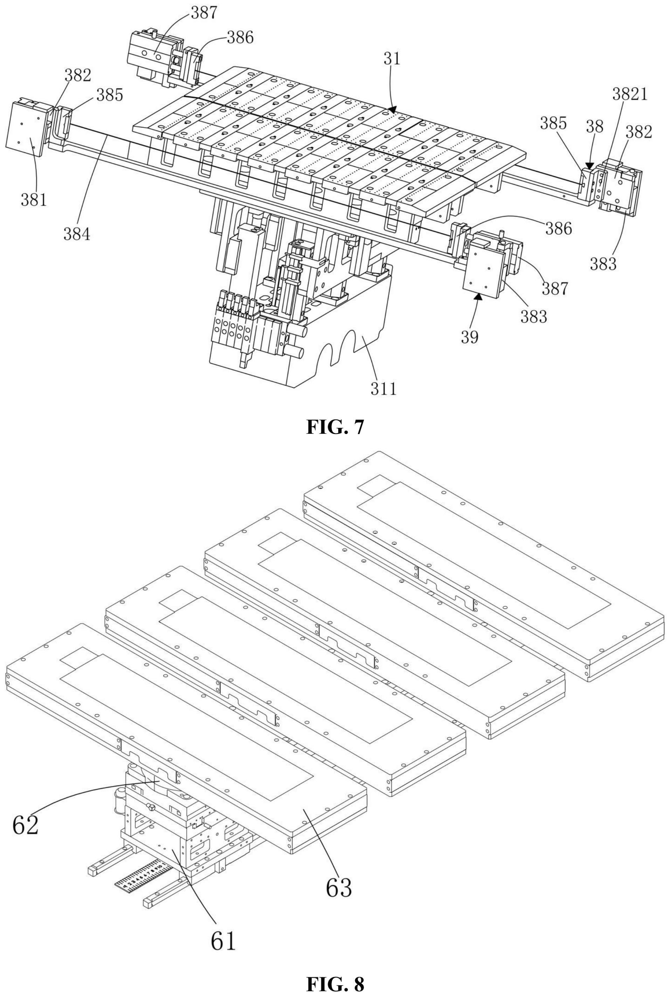

As shown in FIG. 8, the positive electrode sheet pre-positioning apparatus 60a and the negative electrode sheet pre-positioning apparatus 60b each include multiple pre-positioning bases 61, multiple alignment robots 62, and multiple positioning platforms 63. The multiple pre-positioning bases 61 are successively arranged from left to right and are connected to each other. The multiple pre-positioning bases 61 are slidably disposed at the top of the rack. The multiple alignment robots 62 are in a one-to-one correspondence with the multiple pre-positioning bases 61 and are respectively disposed at tops of the corresponding pre-positioning bases 61. The multiple positioning platforms 63 are in a one-to-one correspondence with the multiple alignment robots 62 and are respectively disposed at tops of the corresponding alignment robots 62. The alignment robot 62 is configured to drive the corresponding positioning platform 63 to rotate. In this embodiment, there are four pre-positioning bases 61, and the numbers of the alignment robots 62 and the positioning platforms 63 correspond to the number of the pre-positioning bases 61, and are also respectively four.

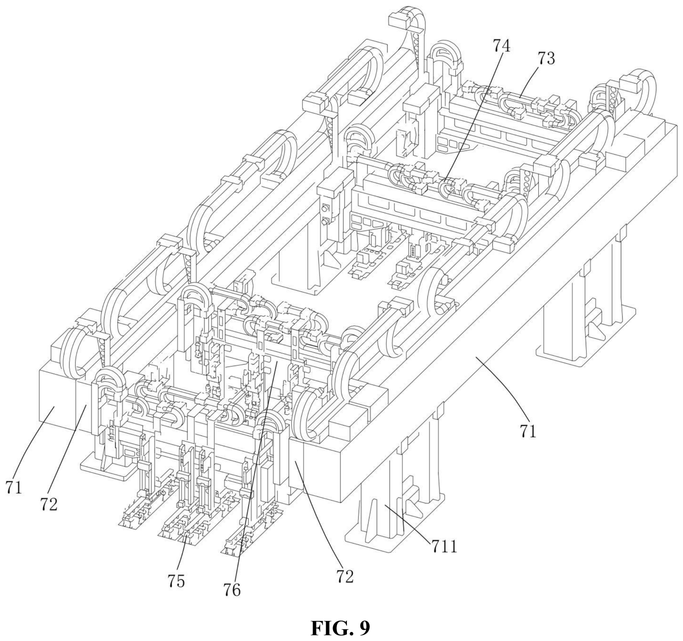

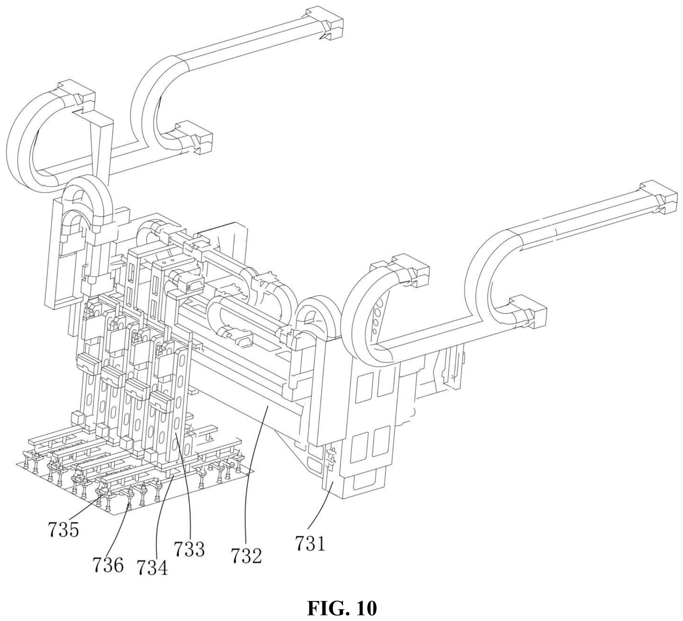

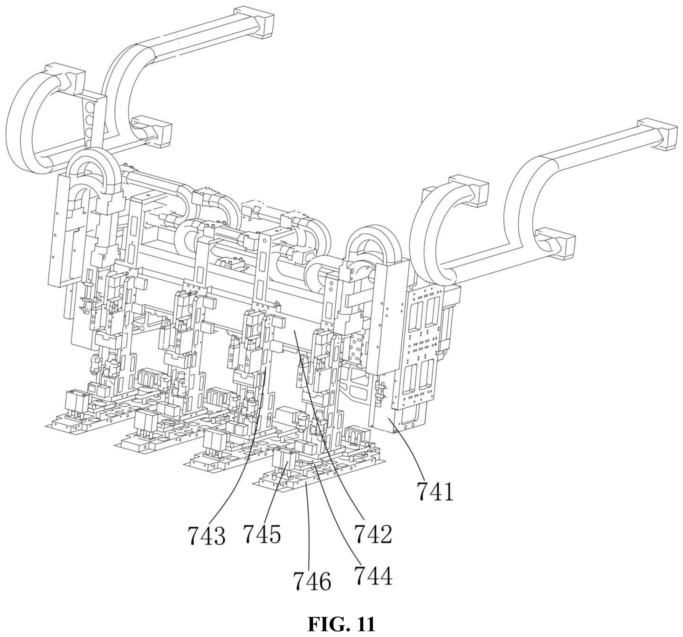

As shown in FIG. 9 to FIG. 11, the conveying apparatus 70 includes two conveying mounting tables 71 disposed opposite to each other left and right, a positive electrode sheet outer suction cup manipulator 73, a positive electrode sheet inner suction cup manipulator 74, a negative electrode sheet outer suction cup manipulator 75, and a negative electrode sheet inner suction cup manipulator 76. The conveying mounting table 71 is disposed at the top of the rack by using conveying bases 711. The quantity of the conveying bases 711 can be set according to actual situations. Two multi-rotor linear motors 72 are respectively disposed on sides of the two conveying mounting tables 71 facing to each other. The negative electrode sheet outer suction cup manipulator 75 and the positive electrode sheet outer suction cup manipulator 73 are symmetrically disposed front and back and are respectively located above the negative electrode sheet conveyor line 25 and above the positive electrode sheet conveyor line 15. The negative electrode sheet inner suction cup manipulator 76 and the positive electrode sheet inner suction cup manipulator 74 are symmetrically disposed front and back and are disposed between the negative electrode sheet outer suction cup manipulator 75 and the positive electrode sheet outer suction cup manipulator 83. Both ends of each of the negative electrode sheet outer suction cup manipulator 75, the negative electrode sheet inner suction cup manipulator 76, the positive electrode sheet inner suction cup manipulator 74, and the positive electrode sheet outer suction cup manipulator 73 are respectively connected to the two multi-rotor linear motors 72. The two multi-rotor linear motors 72 are configured to drive the negative electrode sheet outer suction cup manipulator 75, the negative electrode sheet inner suction cup manipulator 76, the positive electrode sheet inner suction cup manipulator 74, and the positive electrode sheet outer suction cup manipulator 73 to move front and back. The negative electrode sheet pre-positioning apparatus 60b is located below a position between the negative electrode sheet outer suction cup manipulator 75 and the negative electrode sheet inner suction cup manipulator 76. The positive electrode sheet pre-positioning apparatus 60a is located below a position between the positive electrode sheet inner suction cup manipulator 74 and the positive electrode sheet outer suction cup manipulator 73. The lamination apparatus 30 is located below a position between the negative electrode sheet inner suction cup manipulator 76 and the positive electrode sheet inner suction cup manipulator 74. The separator unreeling apparatus 40 is disposed at tops of the two conveying mounting tables 71 and located above the negative electrode sheet outer suction cup manipulator 75 and the negative electrode sheet inner suction cup manipulator 76. The separator pulling apparatus 50 is located between the negative electrode sheet inner suction cup manipulator 76 and the positive electrode sheet inner suction cup manipulator 74. Both ends of the separator pulling apparatus 50 are respectively connected to the two multi-rotor linear motors 72. The two multi-rotor linear motors 72 are configured to drive the separator pulling apparatus 50 to move front and back.

The negative electrode sheet outer suction cup manipulator 75 and the positive electrode sheet outer suction cup manipulator 73 each include two outer suction cup lifting linear modules 731, an outer suction cup translation linear module 732, and multiple outer suction cup assemblies successively arranged at intervals from left to right. The two outer suction cup lifting linear modules 731 are respectively connected to the two multi-rotor linear motors 72. Both ends of the outer suction cup translation linear module 732 are respectively connected to the two outer suction cup lifting linear modules 731. The multiple outer suction cup assemblies are disposed on one side of the outer suction cup translation linear module 732 away from the lamination apparatus 30. The two multi-motor linear motors 72 are respectively configured to drive the two outer suction cup lifting linear modules 731 to move front and back, so that the outer suction cup translation linear module 732 and the multiple outer suction cup assemblies can be driven to move front and back. The two outer suction cup lifting linear modules 731 are configured to drive the outer suction cup translation linear module 732 to move up and down, so that the multiple outer suction cup assemblies can be driven to move up and down. The outer suction cup translation linear module 732 is configured to drive the multiple outer suction cup assemblies to move left and right. In this embodiment, there are four outer suction cup assemblies. The outer suction cup assembly includes an outer suction cup base 733, an outer suction cup mounting seat 734, and multiple outer suction cup sets arranged at intervals from front to back. The number of the outer suction cup sets may be set according to actual situations. The outer suction cup base 733 is disposed on one side of the outer suction cup translation linear module 732 away from the lamination apparatus 30, and the outer suction cup mounting seat 734 is disposed at a bottom of the outer suction cup base 733. The outer suction cup set includes an outer suction cup mounting plate 735 and an outer suction cup 736 disposed running through the outer suction cup mounting plate 735 and disposed at an interval left and right. The outer suction cup mounting plate 735 is disposed at a bottom of the outer suction cup mounting seat 734. One end of the outer suction cup 736 is located below the outer suction cup mounting plate 735, and the other end of the outer suction cup 736 is located above the outer suction cup mounting plate 735. The other ends of the outer suction cups 736 of the multiple outer suction cup sets of the negative electrode sheet outer suction cup manipulator 75 are configured to be connected to a first vacuum-pumping system. The other ends of the outer suction cups 736 of the multiple outer suction cup sets of the positive electrode sheet outer suction cup manipulator 73 are configured to be connected to a second vacuum-pumping system. The outer suction cups 736 of the multiple outer suction cup assemblies of the negative electrode sheet outer suction cup manipulator 75 and the positive electrode sheet outer suction cup manipulator 73 are vacuum-pumped by using the first vacuum-pumping system and the second vacuum-pumping system, so that multiple negative electrode sheets such as four negative electrode sheets and multiple positive electrode sheets such as four positive electrode sheets can be respectively absorbed by using the outer suction cups 736 of the multiple outer suction cup assemblies of the negative electrode sheet outer suction cup manipulator 75 and the positive electrode sheet outer suction cup manipulator 73. The outer suction cups 736 of the multiple outer suction cup assemblies of the negative electrode sheet outer suction cup manipulator 75 and the positive electrode sheet outer suction cup manipulator 73 stop vacuum pumping by using the first vacuum-pumping system and the second vacuum-pumping system, so that multiple negative electrode sheets such as four negative electrode sheets and multiple positive electrode sheets such as four positive electrode sheets can be respectively released by using the outer suction cups 736 of the multiple outer suction cup assemblies of the negative electrode sheet outer suction cup manipulator 75 and the positive electrode sheet outer suction cup manipulator 73.

The negative electrode sheet inner suction cup manipulator 74 and the positive electrode sheet inner suction cup manipulator 76 each include two inner suction cup lifting linear modules 741, an inner suction cup translation linear module 742, and multiple inner suction cup assemblies successively arranged at intervals from left to right. The two inner suction cup lifting linear modules 741 are respectively connected to the two multi-rotor linear motors 72. Both ends of the inner suction cup translation linear module 742 are respectively connected to the two inner suction cup lifting linear modules 741. The multiple inner suction cup assemblies are disposed on one side of the inner suction cup translation linear module 742 away from the lamination apparatus 30. The two multi-motor linear motors 72 are respectively configured to drive the two inner suction cup lifting linear modules 741 to move front and back, so that the inner suction cup translation linear module 742 and the multiple inner suction cup assemblies can be driven to move front and back. The two inner suction cup lifting linear modules 741 are configured to drive the inner suction cup translation linear module 742 to move up and down, so that the multiple inner suction cup assemblies can be driven to move up and down. The inner suction cup translation linear module 742 is configured to drive the multiple inner suction cup assemblies to move left and right. In this embodiment, there are four inner suction cup assemblies. The inner suction cup assembly includes an inner suction cup base 743, an inner suction cup mounting seat 744, two inner suction cup cylinders 745 disposed opposite to each other front and back, and an inner suction cup plate 746. The inner suction cup base 743 is disposed on one side of the inner suction cup translation linear module 742 away from the lamination apparatus 30, and the inner suction cup mounting seat 744 is disposed at a bottom of the inner suction cup base 743. The two inner suction cup cylinders 745 are respectively disposed at both ends of the inner suction cup mounting seat 744. The inner suction cup plate 746 is located below the inner suction cup mounting seat 744. Output ends of the two inner suction cup cylinders 745 are respectively connected to a top of the inner suction cup plate 746. The two inner suction cup cylinders 745 are configured to drive the inner suction cup plate 746 to move up and down. Multiple absorption holes are uniformly formed in a bottom of the inner suction cup plate 746. Air passages are disposed inside the inner suction cup plate 746. Joints are disposed at the top of the inner suction cup plate 746. The air passages are respectively in communication with the multiple absorption holes and the joints. The joints of the negative electrode sheet inner suction cup manipulator 76 and the positive electrode sheet inner suction cup manipulator 74 are respectively configured to be connected to a third vacuum-pumping system and a fourth vacuum-pumping system. The multiple absorption holes are respectively vacuum-pumped through the corresponding joints and air passages by using the third vacuum-pumping system and the fourth vacuum-pumping system, so that multiple negative electrode sheets such as four negative electrode sheets and multiple positive electrode sheets such as four positive electrode sheets can be respectively absorbed by using the inner suction cup plates 746 of the multiple the inner suction cup assemblies of the negative electrode sheet inner suction cup manipulator 76 and the positive electrode sheet inner suction cup manipulator 74. The multiple absorption holes respectively stop vacuum pumping through the corresponding joints and air passages by using the third vacuum-pumping system and the fourth vacuum-pumping system, so that multiple negative electrode sheets such as four negative electrode sheets and multiple positive electrode sheets such as four positive electrode sheets can be respectively released by using the inner suction cup plates of the multiple inner suction cup assemblies of the negative electrode sheet inner suction cup manipulator 76 and the positive electrode sheet inner suction cup manipulator 74.

During actual application, first the negative electrode sheet outer suction cup manipulator 75 is driven to move forward by using the two multiple-rotor linear motors 72, so that the multiple outer suction cup assemblies of the multiple negative electrode sheet outer suction cup manipulators 75 are located above the negative electrode sheet conveyor line 25. Then, the multiple outer suction cup assemblies are driven to move left and right by using the outer suction cup translation linear module 732 of the negative electrode sheet outer suction cup manipulator 75, so as to adjust left-and-right positions of the multiple outer suction cup assemblies. Then, the multiple outer suction cup assemblies are driven to move downward by using the two outer suction cup lifting linear modules 731 of the negative electrode sheet outer suction cup manipulator 75, so as to respectively absorb multiple negative electrode sheets such as four negative electrode sheets on the negative electrode sheet conveyor line 25 by using the multiple outer suction cup sets of the multiple outer suction cup assemblies. Then, the multiple outer suction cup assemblies are driven to move upward to initial positions by using the two outer suction cup lifting linear modules 731 of the negative electrode sheet outer suction cup manipulator 75. Then, the multiple outer suction cup assemblies of the negative electrode sheet outer suction cup manipulator 75 are driven to move backward by using the two multi-rotor linear motors 72, so that the multiple negative electrode sheets are respectively located above the multiple positioning platforms 63 of the negative electrode sheet pre-positioning apparatus 60b. Then, the multiple outer suction cup assemblies are driven to move downward by using the two outer suction cup lifting linear modules 731 of the negative electrode sheet outer suction cup manipulator 75, so that the multiple negative electrode sheets are respectively placed on the multiple positioning platforms 63 of the negative electrode sheet pre-positioning apparatus 60b by using the multiple outer suction cup sets of the multiple outer suction cup assemblies. Then, the multiple outer suction cup assemblies are driven to move upward to initial positions by using the two outer suction cup lifting linear modules 731 of the negative electrode sheet outer suction cup manipulator 75, and then the multiple outer suction cup assemblies of the negative electrode sheet outer suction cup manipulator 75 are driven to move forward by using the two multi-rotor linear motors 72, so as to continue to absorb the multiple negative electrode sheets on the negative electrode sheet conveyor line 25. After the multiple negative electrode sheets are respectively placed on the multiple positioning platforms 63 of the negative electrode sheet pre-positioning apparatus 60b, and the corresponding positioning platforms 63 are respectively driven to rotate by using the multiple alignment robots 62 of the negative electrode sheet pre-positioning apparatus 60b, so that the multiple negative electrode sheets can be corrected and positioned so as to ensure the positional accuracy of the multiple negative electrode sheets. Then, the multiple inner suction cup assemblies of the negative electrode sheet inner suction cup manipulator 76 are driven to move forward by using the two multi-rotor linear motors 72, so that the multiple inner suction cup assemblies are respectively located above the multiple negative electrode sheets of the negative electrode sheet inner suction cup manipulator 60b. Then, the multiple inner suction cup assemblies are driven to move left and right by using the inner suction cup translation linear module 742 of the negative electrode sheet inner suction cup manipulator 76, so as to adjust left-and-right positions of the multiple inner suction cup assemblies. Then, the multiple inner suction cup assemblies are driven to move downward to preset positions by using the two inner suction cup lifting linear modules 741 of the negative electrode sheet inner suction cup manipulator 76, and then the corresponding inner suction cup plate 746 is driven to move downward by using the two inner suction cup cylinders 745, so that the corresponding negative electrode sheets are respectively absorbed by using the inner suction cup plates 746 of the multiple inner suction cup assemblies and then the corresponding inner suction cup plate 746 is driven to move upward to an initial position by using the two inner suction cup cylinders 745. Then, the multiple inner suction cup assemblies are driven to move upward to initial positions by using the two inner suction cup lifting linear modules 741 of the negative electrode sheet inner suction cup manipulator 76. Then, the multiple inner suction cup assemblies of the negative electrode sheet inner suction cup manipulator 76 are driven to move backwards by using the two multi-rotor linear motors 72, so that the multiple inner suction cup assemblies are respectively located above the lamination table 31. Then, the multiple inner suction cup assemblies are driven to move downward to preset positions by using the two inner suction cup lifting linear modules 741 of the negative electrode sheet inner suction cup manipulator 76, and then the corresponding inner suction cup plate 746 is driven to move downward by using the two inner suction cup cylinders 745, so that the multiple negative electrode sheets are placed on the separator of the lamination table 31 by using the inner suction cup plates 746 of the multiple inner suction cup assemblies. Then, the corresponding inner suction cup plate 746 is driven to move upward to an initial position by using the two inner suction cup cylinders 745. Then, the multiple inner suction cup assemblies are driven to move upward to initial positions by using the two inner suction cup lifting linear modules 741 of the negative electrode sheet inner suction cup manipulator 76. Then, the multiple inner suction cup assemblies of the negative electrode sheet inner suction cup manipulator 76 are driven to move forward to initial positions by using the two multi-rotor linear motors 72.

A working principle of the positive electrode sheet outer suction cup manipulator 73 is the same as a working principle of the negative electrode sheet outer suction cup manipulator 75. Differences lie in that the positive electrode sheet outer suction cup manipulator 73 is driven to move by using the two multi-rotor linear motors 72 in a direction opposite to the negative electrode sheet outer suction cup manipulator 75, and the multiple positive electrode sheets on the positive electrode sheet conveyor line 15 are absorbed by using the multiple outer suction cup assemblies of the positive electrode sheet outer suction cup manipulator 73 and placed on the multiple positioning platforms 63 of the positive electrode sheet pre-positioning apparatus 60a. In this way, the corresponding positioning platforms 63 are respectively driven to rotate by using the multiple alignment robots 62 of the positive electrode sheet pre-positioning apparatus 60a, so that the multiple positive electrode sheets can be respectively corrected and positioned so as to ensure the positional accuracy of the multiple positive electrode sheets. A working principle of the positive electrode sheet inner suction cup manipulator 74 is the same as a working principle of the negative electrode sheet inner suction cup manipulator 76. Differences lie in that the positive electrode sheet inner suction cup manipulator 74 is driven to move by using the two multi-rotor linear motors 72 in a direction opposite to the negative electrode sheet inner suction cup manipulator 76, and the multiple positive electrode sheets on the positive electrode sheet pre-positioning apparatus 60a are absorbed by using the multiple inner suction cup assemblies of the positive electrode sheet inner suction cup manipulator 74 and placed on the separator of the lamination table 31.

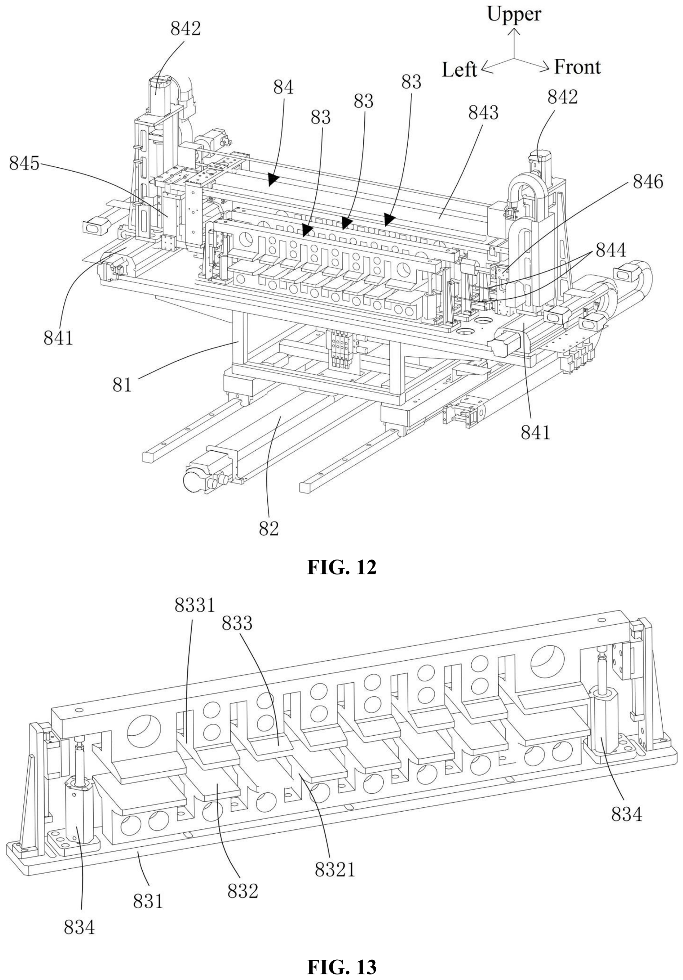

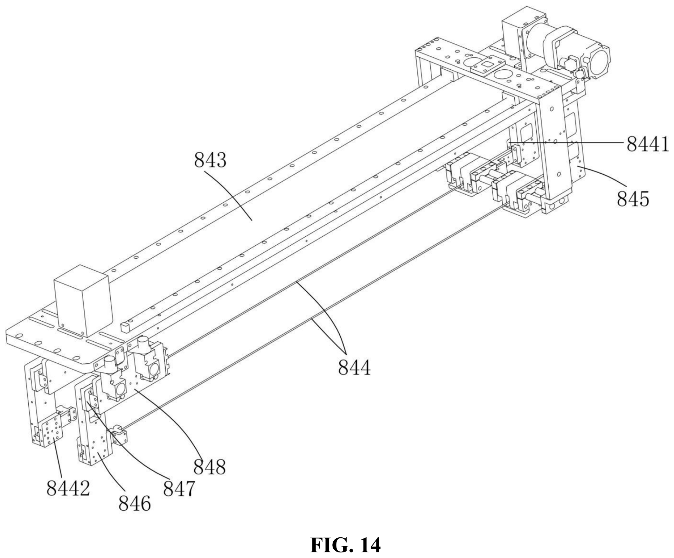

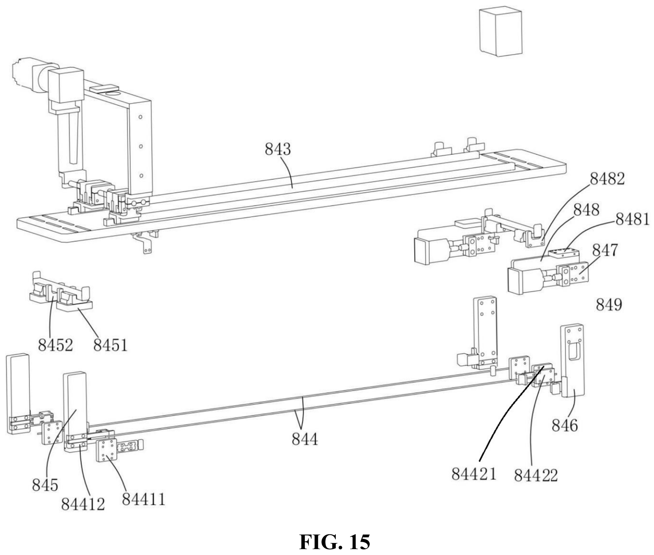

As shown in FIG. 12 to FIG. 15, the battery cell splitting apparatus 80 includes a splitting base 81, a base linear module 82 disposed at the top of a rack, multiple splitting fixtures 83, and a splitting mechanism 84. The splitting base 81 is disposed at a top of the base linear module 82, and the base linear module 82 is configured to drive the splitting base 81 to move left and right. The multiple splitting fixtures 83 are successively arranged at intervals from left to right. The splitting fixtures 83 and the splitting mechanism 84 are all disposed at a top of the splitting base 81, and a left-and-right movement of the splitting base 81 can drive the multiple splitting fixtures 83 and the splitting mechanism 84 to move left and right. The number of the splitting fixtures 83 corresponds to the numbers of the outer suction cup assemblies and the inner suction cup assemblies of the conveying apparatus 70. The battery cell splitting apparatus 80 having three splitting fixtures 83 is shown in the accompanying drawings in this embodiment.

The splitting fixture 83 includes a fixture mounting plate 831 disposed at a top of the splitting base 81, a lower pressure mounting seat 832, an upper pressure mounting seat 833, and two splitting lifting cylinders 834. The lower pressure mounting seat 832 is disposed at a top of the fixture mounting plate 831. Multiple first clearance slots 8321 are disposed at a top of the lower pressure mounting seat 832. The multiple first clearance slots 8321 are successively disposed at intervals from front to back. The upper pressure mounting seat 833 is located above the lower pressure mounting seat 832 and opposite to the lower pressure mounting seat 832. multiple second clearance slots 8331 are disposed at a bottom of the upper pressure mounting seat 833. The multiple second clearance slots 8331 are in a one-to-one correspondence with the multiple first clearance slots 8321. The two splitting lifting cylinders 834 are respectively disposed at the top of the fixture mounting plate 831. The lower pressure mounting seat 832 is located between the two splitting lifting cylinders 834. Output ends of the two splitting lifting cylinders 834 are respectively connected to both ends of the upper pressure mounting seat 833.

The splitting mechanism 84 includes two splitting translation linear modules 841 disposed opposite to each other front and back, two splitting lifting linear modules 842, a splitting mounting plate 843, and multiple splitting hot-cutting wires 844. The two splitting translation linear modules 841 are respectively disposed at the top of the splitting base 81. The multiple splitting fixtures 83 are located between the two splitting translation linear modules 841. The two splitting lifting linear modules 842 are respectively disposed at tops of the two splitting translation linear modules 812. The splitting mounting plate 843 is located above the multiple splitting fixtures 83. Both ends of the splitting mounting plate 843 are respectively connected to the two splitting lifting linear modules 842. The multiple splitting hot-cutting wires 844 are located below the splitting mounting plate 843 and are successively disposed at intervals from left to right. The number of the splitting hot-cutting wires 844 is one less than that of the splitting fixtures 83. Each splitting hot-cutting wire 844 is respectively located between every two adjacent splitting fixtures 83. One end and the other end of the splitting hot-cutting wire 844 are respectively provided with a first splitting block 8441 and a second splitting block 8442. One end and the other end of the splitting hot-cutting wire 844 are respectively configured to be electrically connected to a control system, so that power can be supplied to the splitting hot-cutting wire 844 by using the control system. The splitting hot-cutting wire 844 is heated after being powered on. In this embodiment, there are four negative electrode sheets and four positive electrode sheets on the lamination table 31, respectively. Therefore, there are three gaps between the plates of the integral battery cell. During actual application, each splitting hot-cutting wire 844 respectively corresponds to one gap. The splitting hot-cutting wire 844 is configured to cut the separator at the corresponding gap, so that the integral battery cell is split into multiple single battery cells. The first splitting block 8441 is disposed on one side of a first splitting pillar 845 and close to a bottom of the first splitting pillar 845. A first mounting block 8451 is disposed at a top of the first splitting pillar 845. A second mounting block 8452 is disposed on one side of the first mounting block 8451. The second mounting block 8452 is disposed at a bottom of the splitting mounting plate 843. The second splitting block 8442 is disposed on one side of the second splitting pillar 846 and close to a bottom of the second splitting pillar 846. A splitting sliding block 847 is disposed on one side of the second splitting pillar 846 at a position close to the top of the second splitting pillar 846. The splitting sliding block 847 is slidably disposed on one side of a splitting support plate 848. A third mounting block 8481 is disposed at a top of the splitting support plate 848. A fourth mounting block 8482 is disposed on one side of the third mounting block 8481. The fourth mounting block 8482 is disposed at the bottom of the splitting mounting plate 843. A splitting tensioning cylinder 849 is disposed on one side of the splitting support plate 848. An output end of the splitting tensioning cylinder 849 is connected to the splitting sliding block 847. The splitting tensioning cylinder 849 is located between the second splitting pillar 846 and the multiple splitting fixtures 83. The splitting tensioning cylinder 849 is configured to drive the splitting sliding block 847 to move toward a direction close to or away from the center of the splitting hot-cutting wire 844, that is, move front and back, so that the other end of the splitting hot-cutting wire 844 can be driven to move toward the direction close to or away from the center of the splitting hot-cutting wire 844 by using the second splitting pillar 846 and the second splitting block 8442. The other end of the splitting hot-cutting wire 844 is driven to move toward the direction away from the center of the splitting hot-cutting wire 844, so that the splitting hot-cutting wire 844 can be tensioned. In this way, when the separator of the integral battery cell is cut by using the splitting hot-cutting wire 844, the smoothness of incisions of the separator can be ensured, so that the quality of the single battery cells is ensured. The multiple splitting fixtures 83 are located between the first splitting pillar 845 and the second splitting pillar 846. The two splitting translation linear modules 841 are respectively configured to drive the two splitting lifting linear modules 842 to move left and right, so that the splitting mounting plate 843 and the multiple splitting hot-cutting wires 844 can be driven to move left and right, left-and-right positions of the multiple splitting hot-cutting wires 844 can be adjusted, and it can be ensured that widths of the multiple single battery cells after splitting are consistent. The two splitting lifting linear modules 842 are configured to drive the splitting mounting plate 843 to move up and down, so that the multiple splitting hot-cutting wires 844 can be driven to move up and down. In this embodiment, the first splitting block 8441 includes a first connection block 84412 and a second connection block 84411. A first mounting slot is formed in one side of the first splitting pillar 845. The first connection block 84412 is disposed in the first mounting slot. The second connection block 84411 is disposed on one side of the first splitting pillar 845 and on one side of the first connection block 84412 away from a bottom of the first mounting slot. The second splitting block 8442 includes a third connection block 84422 and a fourth connection block 84421. A second mounting slot is formed in one side of the second splitting pillar 846. The third connection block 84422 is disposed in the second mounting slot. The fourth connection block 84421 is disposed on one side of the second splitting pillar 846 and on one side of the third connection block 84422 away from a bottom of the second mounting slot.

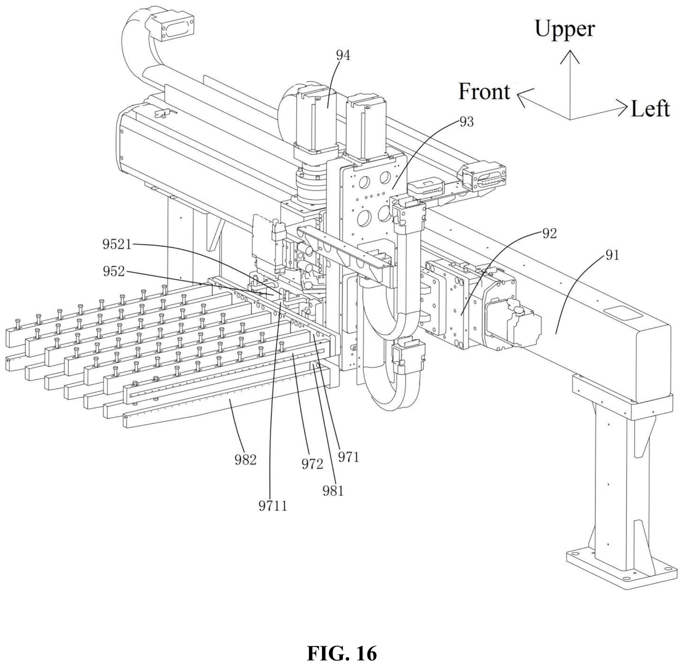

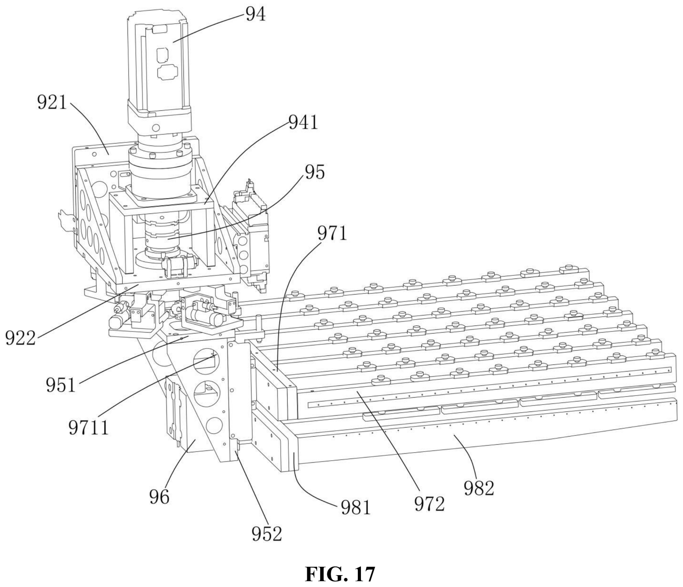

As shown in FIG. 16 and FIG. 17, the discharging manipulator 90 includes a discharging base 91 disposed at the top of the rack, a discharging translation linear module 92, a discharging lifting linear module 93, a discharging motor 94, a discharging rotating shaft 95, a claw cylinder 96, an upper claw set, and a lower claw set. The discharging translation linear module 92 is disposed on one side of the discharging base 91 facing to the battery cell splitting apparatus 80. The discharging lifting linear module 93 is disposed on one side of the discharging translation linear module 92 facing to the battery cell splitting apparatus 80. A discharging mounting seat 921 is disposed on one side of the discharging lifting linear module 93. A discharging mounting plate 922 is disposed on one side of the discharging mounting seat 921 away from the discharging lifting linear module 93. The discharging motor 94 is disposed at a top of the discharging mounting plate 922 by using a motor base 941. The discharging rotating shaft 95 runs through a through hole of the discharging mounting plate 922. One end of the discharging rotating shaft 95 is connected to an output shaft of the discharging motor 94, and the other end of the discharging rotating shaft 95 is connected to a top of a discharging top plate 951. A discharging bearing is disposed in the through hole of the discharging mounting plate 922. The discharging bearing is sleeved on an outer circumference of the discharging rotating shaft 95 so as to provide rotational support for the discharging rotating shaft 95. A discharging side plate 952 is disposed at a bottom of the discharging top plate 951. The claw cylinder 96 is disposed on one side of the discharging side plate 952 away from the battery cell splitting apparatus 80. The upper claw set and the lower claw set are opposite to each other up and down. The upper claw set and the lower claw set are located between the discharging side plate 952 and the battery cell splitting apparatus 80 and located below the discharging translation linear module 92. The upper claw set includes an upper claw mounting seat 971 and multiple upper claws 972. The upper claw mounting seat 971 is connected to an output end of the claw cylinder 96. Specifically, an upper claw connection block 9711 is disposed on one side of the upper claw mounting seat 971 close to the discharging side plate 952. One end of the upper claw connection block 9711 away from the upper claw mounting seat 971 runs through a run-through hole position 9521 of the feeding side plate 952 and is connected to an output end of the clamp cylinder 96. The multiple upper claws 972 are successively disposed on one side of the upper claw mounting seat 971 facing to the battery cell splitting apparatus 80 at intervals from front to back. The lower claw set includes a lower claw mounting seat 981 and multiple lower claws 982. The lower claw mounting seat 981 is disposed on one side of the discharging side plate 952 facing to the battery cell splitting apparatus 80. The multiple lower claws 982 are successively disposed on one side of the lower claw mounting seat 981 facing to the battery cell splitting apparatus 80 at intervals from front to back and are in a one-to-one correspondence with the multiple upper claws 972. The second clearance slots 8331 of the multiple splitting fixtures 83 constitute second avoidance channels. The first clearance slots 8321 of the multiple splitting fixtures 83 constitute a first avoidance through hole. Each upper claw 972 respectively corresponds to one second avoidance channel. The second avoidance channel is configured to avoid the corresponding upper claw 972. Each lower claw 982 respectively corresponds to one first avoidance channel. The first avoidance channel is configured to avoid the corresponding lower claw 982. The discharging translation linear module 92 is configured to drive the discharging lifting linear module 93 to move front and back, so that the discharging motor 94, the discharging rotating shaft 95, the claw cylinder 96, the upper claw set and the lower claw set can be driven to move front and back. The discharging lifting linear module 93 is configured to drive the discharging motor 94, the discharging rotating shaft 95, the claw cylinder 96, the upper claw set and the lower claw set to move up and down. The discharging motor 94 is configured to drive the discharging rotating shaft 95 to rotate, so that the clamp cylinder 96, the upper claw set and the lower claw set can be driven to rotate.

During actual application, after edge sealing for the front side and the rear side of the integral battery cell are respectively completed by using the first hot-cutting mechanism 38 and the second hot-cutting mechanism 39, first the multiple corresponding filling blocks 316 are driven to move downward by using the filling cylinders 318 of the two filling assemblies until the filling block 316 makes contact with a bottom of the corresponding avoidance slot 3141. At this time, the filling block 316 is separated from the corresponding run-through hole. Then, the multiple upper claws 972 and the multiple lower claws 982 are driven to move forward to positions corresponding to the lamination table 31 by using the discharging translation linear module 92, and then the multiple upper claws 972 and the multiple lower claws 982 are driven to rotate by 180 degrees by using the discharging motor 94, so that the multiple upper claws 972 and the multiple lower claws 982 face the lamination table 31, and then the multiple upper claws 972 and the multiple lower claws 982 are driven to move up and down by using the discharging lifting linear module 93, so that the multiple lower claws 982 respectively correspond to the multiple run-through holes of the two lamination supporting plates 312. Then, the lamination table 31 is driven to move right by using the lamination translation linear module, so that the multiple lower claws 982 are respectively inserted into the multiple run-through holes of the lamination table 31. At this time, the multiple upper claws 972 are located above the integral battery cell on the lamination table 31. Then, the multiple upper claws 972 are driven to move downward by using the clamp cylinder 96, so that the integral battery cell on the lamination table 31 can be clamped by using the multiple upper claws 972 and the multiple lower claws 982. Then, the lamination table 31 is driven to move left to an initial position by using the lamination translation linear module. In this way, the multiple lower claws 982 are separated from the multiple run-through holes of the lamination table 31. Then, the multiple upper claws 972 and the multiple lower claws 982 are driven to rotate by 180 degrees to return to initial positions by using the discharging motor 94. Then, the multiple upper claws 972 and the multiple lower claws 982 are driven to move backward to positions corresponding to the battery cell splitting apparatus 80 by using the discharging translation linear module 92. Then, the multiple splitting hot-cutting wires 844 are driven to move upward by using the two splitting lifting linear modules 842, so that the multiple splitting hot-cutting wires 844 are located above the multiple splitting fixtures 83. Then, the splitting base 81, the multiple splitting fixtures 83 and the splitting mechanism 84 are driven to move left by using the base linear module 82, so that the integral battery cell is located at a top of the lower pressure mounting seat 832, the multiple upper claws 972 are respectively inserted into the corresponding second avoidance channel, and the multiple lower claws 982 are respectively inserted into the corresponding first avoidance channel. Then, the upper pressure mounting seat 833 is driven to move downward by using the two splitting lifting cylinders 834, so that the integral battery cell is pressed to a top of the lower pressure mounting seat 832. At this time, each splitting hot-cutting wire 844 respectively corresponds to one gap between the plates of the integral battery cell. Then, the multiple upper claws 972 are driven to move upward by using the clamp cylinder 96, so as to loosen the integral battery cell. Then, the splitting base 81, the multiple splitting fixtures 83 and the splitting mechanism 84 are driven to move right to initial positions by using the base linear module 82. Then, the multiple splitting hot-cutting wires 844 are driven to move downward to initial positions by using the two splitting lifting linear modules 842. During the splitting hot-cutting wires 844 move downward, the separator can be cut at the gap corresponding to the integral battery cell by using the splitting hot-cutting wires 844, so that the integral battery cell is split into multiple single battery cells such as four single battery cells. In this way, multiple single battery cells are obtained.

In the present disclosure, by disposing the positive electrode sheet unreeling mechanism 11, the positive electrode sheet V-notch punching mechanism 12, the positive electrode sheet cutting mechanism 13, the positive electrode sheet detection mechanism 14, the positive electrode sheet conveyor line 15, the negative electrode sheet unreeling mechanism 21, the negative electrode sheet V-notch punching mechanism 22, the negative electrode sheet cutting mechanism 23, the negative electrode sheet detection mechanism 24, the negative electrode sheet conveyor line 25, the separator unreeling apparatus 40, the separator pulling apparatus 50, the lamination apparatus 30, the positive electrode sheet pre-positioning apparatus 60a, the negative electrode sheet pre-positioning apparatus 60b, the conveying apparatus 70, the battery cell splitting apparatus 80 and the discharging manipulator 90, multiple single battery cells can be produced simultaneously, so that the production efficiency is improved, and the production costs are reduced. The multiple positive electrode sheets and the multiple negative electrode sheets can be corrected and positioned by using the positive electrode sheet pre-positioning apparatus 60a and the negative electrode sheet pre-positioning apparatus 60b, so that the positional accuracy of the multiple positive electrode sheets and the multiple negative electrode sheets can be ensured. In addition, in a manner of splitting the integral battery cell after discharging, discharging time of the battery cell on the lamination table 31 can be reduced compared with a manner in which first splitting is performed on the lamination table 31 and then the multiple single battery cells are respectively discharged. In addition, the first hot-cutting mechanism 38 and the second hot-cutting mechanism 39 are disposed, the separator can be cut and edge sealing can be performed on the front side of the integral battery cell by using the first hot-cutting mechanism 38, and edge sealing can be performed on the rear side of the integral battery cell by using the second hot-cutting mechanism. A manner of splitting after edge sealing is adopted. In this way, during the integral battery cell is conveyed to the battery cell splitting apparatus 80 by using the discharging manipulator 90, edges on both sides of the separator of the integral battery cell cannot be overturned, so that the quality of the integral battery cell is improved.

The present disclosure further includes a gluing manipulator 100, a gluing apparatus 110, a hot-pressing feeding manipulator 120, a hot-pressing discharging manipulator 140, a hot-pressing apparatus 130, a two-dimensional code gluing apparatus 150, a transfer manipulator 160, a testing apparatus 170, and a discharging conveyor line 180 that are disposed at the top of the rack. The gluing manipulator 100 is located on the right of the discharging manipulator 90, and the gluing apparatus 110 is located in front of the discharging manipulator 90 and the gluing manipulator 100. The gluing apparatus 110 is configured to glue a front side, a rear side, a left side, and a right side of the single battery cell. The discharging manipulator 90 is further configured to convey the multiple single battery cells on the battery cell splitting apparatus 80 to the gluing manipulator 100 together. The gluing manipulator 100 is configured to convey the multiple single battery cells on the discharging manipulator 90 to the gluing apparatus 110 successively. The hot-pressing apparatus 130 is located in front of the gluing apparatus 110, and the hot-pressing feeding manipulator 120 is located between the gluing apparatus 110 and the hot-pressing apparatus 130. The two-dimensional code gluing apparatus 150, the testing apparatus 160 and the discharging conveyor line 170 are successively disposed from left to right and are located in front of the hot-pressing apparatus 130. The hot-pressing discharging manipulator 140 is located on the left of the hot-pressing apparatus 130 and the two-dimensional code gluing apparatus 150. The transfer manipulator 160 is located between the two-dimensional code gluing apparatus 150 and the testing apparatus 170. The hot-pressing apparatus 130 is configured to hot-press the single battery cells, and the hot-pressing feeding manipulator 120 is configured to convey the single battery cells on the gluing apparatus 110 to the hot-pressing apparatus 130. The two-dimensional code gluing apparatus 150 is configured to perform two-dimensional gluing on the single battery cells. The testing apparatus 160 is configured to perform Hi-pot testing and thickness testing on the single battery cells. The discharging conveyor line 180 is configured to convey the single battery cells to a discharging station, so as to realize discharging of the single battery cells. The hot-pressing discharging manipulator 140 is configured to convey the single battery cells on the hot-pressing apparatus 130 to the two-dimensional code gluing apparatus 150. The transfer manipulator 160 is configured to transport the single battery cells on the two-dimensional code gluing apparatus 150 to the testing apparatus 170 and configured to convey the single battery cells on the testing apparatus 170 to the discharging conveyor line 180.

In the present disclosure, structures of the gluing manipulator 100, the gluing apparatus 110, the hot-pressing feeding manipulator 120, the hot-pressing discharging manipulator 140, the hot-pressing apparatus 130, the two-dimensional code gluing apparatus 150, the transfer manipulator 160, the testing apparatus 170, and the discharging conveyor line 180 do not change, and conventional structures are adopted. The number of the hot-pressing apparatuses 130 may be set according to actual situations.

During actual application, after the integral battery cell is split into multiple single battery cells such as four single battery cells by using the multiple splitting hot-cutting wires 844 of the battery cell splitting apparatus 80, the multiple splitting hot-cutting wires 844 are driven to move upward by using the two splitting lifting linear modules 842, so that the multiple splitting hot-cutting wires 844 are located above the multiple splitting fixtures 83. Then, the splitting base 81, the multiple splitting fixtures 83 and the splitting mechanism 84 are driven to move left by using the base linear module 82, so that the multiple upper claws 972 of the discharging manipulator 90 are respectively inserted into the corresponding second avoidance channel, the multiple lower claws 982 of the discharging manipulator 90 are respectively inserted into the corresponding first avoidance channel, and the multiple upper claws 972 and the multiple lower claws 982 are respectively located above and below the multiple single battery cells, and then the multiple upper claws 972 are driven to move downward by using the clamp cylinder 96, so as to clamp the multiple single battery cells by using the multiple upper claws 972 and the multiple lower claws 982. Then, the upper pressure mounting seat 833 is driven to move upward to an initial position by using the two splitting lifting cylinders 834, so as to loosen the multiple single battery cells. Then, the splitting base 81, the multiple splitting fixtures 83 and the splitting mechanism 84 are driven to move right to initial positions by using the base linear module 82. Then, the multiple splitting hot-cutting wires 844 are driven to move downward to initial positions by using the two splitting lifting linear modules 842. Then, the multiple upper claws 972, the multiple lower claws 982 and the multiple single battery cells are driven to move forward to the gluing manipulator 110 by using the discharging translation linear module 92. Then, the multiple single battery cells on the discharging manipulator 90 are successively conveyed to the gluing apparatus 110 by using the gluing manipulator 110, so as to successively glue the front sides, the rear sides, the left sides and the right sides of the multiple single battery cells by using the gluing apparatus 110. After gluing on each single battery cell is completed by using the gluing apparatus 110, the single battery cell on the gluing apparatus 110 is conveyed to the hot-pressing apparatus 130 by using the hot-pressing feeding manipulator 120, so as to compact the single battery cells by using the hot-pressing apparatus 130. Then, the hot-pressing discharging manipulator 140 is configured to convey the single battery cells on the hot-pressing apparatus 130 to the two-dimensional code gluing apparatus 150, so as to perform two-dimensional code gluing on the single battery cells by using the two-dimensional code gluing apparatus 150. Then, the single battery cells on the two-dimensional code gluing apparatus 150 are conveyed to the testing apparatus 170 by using the transfer manipulator 160, so as to perform Hi-pot testing and thickness testing on the single battery cells by using the testing apparatus 170. Then, the single battery cells on the testing apparatus 170 are conveyed to the discharging conveyor line 180 by using the transfer manipulator 160, so as to convey the single battery cells to the discharging station for discharging by using the discharging conveyor line 180.

In the present disclosure, the gluing manipulator 100, the gluing apparatus 110, the hot-pressing feeding manipulator 120, the hot-pressing feeding manipulator 140, the hot-pressing apparatus 130, the two-dimensional code gluing apparatus 150, the transfer manipulator 160, the testing apparatus 170 and the discharging conveyor line 180 are disposed, so that side gluing, hot pressing, two-dimensional code gluing, Hi-pot testing and thickness testing can be performed on the single battery cells after splitting on a same device without using different devices, so that the production time can be reduced, the production efficiency is improved, and the production costs are reduced.

The above is used for specifically explaining preferred embodiments of the present disclosure, but the creation of the present disclosure is not limited to the embodiment, so that those skilled in the art can make various equivalent deformations or substitutions on the premise of not violating the spirit of the present disclosure, and such equivalent deformations or substitutions are encompassed within the scope as defined by the claims of this application.

## Claims

1. A lamination device capable of simultaneously laminating a plurality of sheets, comprising a rack, a positive electrode sheet die-cutting apparatus, a negative electrode sheet die-cutting apparatus disposed opposite to the positive electrode sheet die-cutting apparatus front and back, a lamination apparatus, a separator unreeling apparatus, and a separator pulling apparatus, wherein the positive electrode sheet die-cutting apparatus comprises a positive electrode sheet unreeling mechanism configured to unreel a positive electrode sheet material strip, a positive electrode sheet V-notch punching mechanism configured to perform V-notch punching on both sides of the positive electrode sheet material strip, a positive electrode sheet cutting mechanism configured to cut the positive electrode sheet material strip into positive electrode sheets, a positive electrode sheet detection mechanism configured to perform size detection and surface defect detection on the positive electrode sheets, and a positive electrode sheet conveyor line configured to convey the positive electrode sheets; the positive electrode sheet unreeling mechanism, the positive electrode sheet V-notch punching mechanism, the positive electrode sheet cutting mechanism, the positive electrode sheet detection mechanism, and the positive electrode sheet conveyor line are successively disposed at a top of the rack from left to right, the negative electrode sheet die-cutting apparatus comprises a negative electrode sheet unreeling mechanism configured to unreel a negative electrode sheet material strip, a negative electrode sheet V-notch punching mechanism configured to perform V-notch punching on both sides of the negative electrode sheet material strip, a negative electrode sheet cutting mechanism configured to cut the negative electrode sheet material strip into negative electrode sheets, a negative electrode sheet detection mechanism configured to perform size detection and surface defect detection on the negative electrode sheets, and a negative electrode sheet conveyor line configured to convey the negative electrode sheets; the negative electrode sheet unreeling mechanism, the negative electrode sheet V-notch punching mechanism, the negative electrode sheet cutting mechanism, the negative electrode sheet detection mechanism, and the negative electrode sheet conveyor line are successively disposed at the top of the rack from left to right, the lamination apparatus comprises a lamination table, the separator unreeling apparatus is configured to unreel a separator, the separator pulling apparatus is configured to clamp the separator and drive the separator to move backward so as to lay the separator on the lamination table, lay the separator on the negative electrode sheets of the lamination table and lay the separator on the positive electrode sheets of the lamination table, and the separator unreeling apparatus and the separator pulling apparatus are both located in front of the lamination apparatus and located above the lamination apparatus; and the lamination device further comprises:
a positive electrode sheet pre-positioning apparatus, slidably disposed at the top of the rack, and configured to correct and position the positive electrode sheets;
a negative electrode sheet pre-positioning apparatus, slidably disposed at the top of the rack and disposed opposite to the positive electrode sheet pre-positioning apparatus front and back, and configured to correct and position the negative electrode sheets, wherein the lamination apparatus is located between the positive electrode sheet pre-positioning apparatus and the negative electrode sheet pre-positioning apparatus;
a conveying apparatus, disposed at the top of the rack and located between the positive electrode sheet conveyor line and the negative electrode sheet conveyor line, configured to convey the positive electrode sheets on the positive electrode sheet conveyor line to the positive electrode sheet pre-positioning apparatus, configured to convey the negative electrode sheets on the negative electrode sheet conveyor line to the negative electrode sheet pre-positioning apparatus, configured to convey the positive electrode sheets on the positive electrode sheet pre-positioning apparatus to the separator of the lamination table, and configured to convey the negative electrode sheets on the negative electrode sheet pre-positioning apparatus to the separator of the lamination table, wherein the lamination apparatus, the positive electrode sheet pre-positioning apparatus, and the negative electrode sheet pre-positioning apparatus are all located in the conveying apparatus;
a battery cell splitting apparatus, disposed at the top of the rack and located on the right of the lamination apparatus and the positive electrode sheet pre-positioning apparatus, and configured to split an integral battery cell into a plurality of single battery cells; and
a discharging manipulator, disposed at the top of the rack and located between the lamination apparatus and the battery cell splitting apparatus, and configured to convey the integral battery cell on the lamination table to the battery cell splitting apparatus; and
the lamination apparatus further comprises a lamination translation linear module disposed at the top of the rack, a lamination mounting plate disposed at a top of the lamination translation linear module, and a first hot-cutting mechanism disposed at a top of the lamination mounting plate, the lamination table is disposed at the top of the lamination mounting plate, the first hot-cutting mechanism is located in front of the lamination table, and the first hot-cutting mechanism is configured to cut the separator.

2. The lamination device capable of simultaneously laminating a plurality of sheets according to claim 1, wherein the positive electrode sheet pre-positioning apparatus and the negative electrode sheet pre-positioning apparatus each comprise a plurality of pre-positioning bases, a plurality of alignment robots, and a plurality of positioning platforms, the plurality of pre-positioning bases are successively arranged from left to right and are connected to each other, the plurality of pre-positioning bases are slidably disposed at the top of the rack, the plurality of alignment robots are in a one-to-one correspondence with the plurality of pre-positioning bases and are respectively disposed at tops of the corresponding pre-positioning bases, the plurality of positioning platforms are in a one-to-one correspondence with the plurality of alignment robots and are respectively disposed at tops of the corresponding alignment robots, and each of the plurality of alignment robots is configured to drive a corresponding one of the plurality of positioning platforms to rotate.

3. The lamination device capable of simultaneously laminating a plurality of sheets according to claim 1, wherein the conveying apparatus comprises two conveying mounting tables disposed opposite to each other left and right, a positive electrode sheet outer suction cup manipulator, a positive electrode sheet inner suction cup manipulator, a negative electrode sheet outer suction cup manipulator, and a negative electrode sheet inner suction cup manipulator, the conveying mounting tables are disposed at the top of the rack by using conveying bases, two multi-rotor linear motors are respectively disposed on sides of the two conveying mounting tables facing to each other, the negative electrode sheet outer suction cup manipulator and the positive electrode sheet outer suction cup manipulator are symmetrically disposed front and back and are respectively located above the negative electrode sheet conveyor line and above the positive electrode sheet conveyor line, the negative electrode sheet inner suction cup manipulator and the positive electrode sheet inner suction cup manipulator are symmetrically disposed front and back and are disposed between the negative electrode sheet outer suction cup manipulator and the positive electrode sheet outer suction cup manipulator, both ends of each of the negative electrode sheet outer suction cup manipulator, the negative electrode sheet inner suction cup manipulator, the positive electrode sheet inner suction cup manipulator, and the positive electrode sheet outer suction cup manipulator are respectively connected to the two multi-rotor linear motors, the negative electrode sheet pre-positioning apparatus is located below a position between the negative electrode sheet outer suction cup manipulator and the negative electrode sheet inner suction cup manipulator, the positive electrode sheet pre-positioning apparatus is located below a position between the positive electrode sheet inner suction cup manipulator and the positive electrode sheet outer suction cup manipulator, the lamination apparatus is located below a position between the negative electrode sheet inner suction cup manipulator and the positive electrode sheet inner suction cup manipulator, the separator unreeling apparatus is disposed at tops of the two conveying mounting tables and located above the negative electrode sheet outer suction cup manipulator and the negative electrode sheet inner suction cup manipulator, the separator pulling apparatus is located between the negative electrode sheet inner suction cup manipulator and the positive electrode sheet inner suction cup manipulator, and both ends of the separator pulling apparatus are respectively connected to the two multi-rotor linear motors.

4. The lamination device capable of simultaneously laminating a plurality of sheets according to claim 3, wherein each of the negative electrode sheet outer suction cup manipulator and the positive electrode sheet outer suction cup manipulator comprises two outer suction cup lifting linear modules, an outer suction cup translation linear module, and a plurality of outer suction cup assemblies successively arranged at intervals from left to right, the two outer suction cup lifting linear modules are respectively connected to the two multi-rotor linear motors, both ends of the outer suction cup translation linear module are respectively connected to the two outer suction cup lifting linear modules, and the plurality of outer suction cup assemblies are disposed on one side of the outer suction cup translation linear module away from the lamination apparatus; and
each of the negative electrode sheet inner suction cup manipulator and the positive electrode sheet inner suction cup manipulator comprises two inner suction cup lifting linear modules, an inner suction cup translation linear module, and a plurality of inner suction cup assemblies successively arranged at intervals from left to right, the two inner suction cup lifting linear modules are respectively connected to the two multi-rotor linear motors, both ends of the inner suction cup translation linear module are respectively connected to the two inner suction cup lifting linear modules, and the plurality of inner suction cup assemblies are disposed on one side of the inner suction cup translation linear module away from the lamination apparatus.

5. The lamination device capable of simultaneously laminating a plurality of sheets according to claim 1, wherein the lamination apparatus further comprises a second hot-cutting mechanism located behind the lamination table, the second hot-cutting mechanism is disposed at the top of the lamination mounting plate, and the first hot-cutting mechanism and the second hot-cutting mechanism are respectively configured to seal a front side and a rear side of the integral battery cell; and
each of the first hot-cutting mechanism and the second hot-cutting mechanism comprises two hot-cutting bases disposed opposite to each other left and right, two hot-cutting mounting plates, two hot-cutting support plates, two hot-cutting lifting cylinders, a separator hot-cutting wire, and a hot-cutting tensioning cylinder, the two hot-cutting bases are both disposed at the top of the lamination mounting plate, the two hot-cutting mounting plates are respectively disposed at tops of the two hot-cutting bases, the two hot-cutting support plates are respectively slidably disposed on sides of the two hot-cutting mounting plates facing to the lamination table, the two hot-cutting lifting cylinders are respectively disposed on sides of the two hot-cutting mounting plates facing to the lamination table, output ends of the two hot-cutting lifting cylinders are respectively connected to tops of the two hot-cutting support plates, one end and an other end of the separator hot-cutting wire are respectively provided with a first hot-cutting block and a second hot-cutting block, the first hot-cutting block is disposed on one side of one of the hot-cutting support plates facing to the lamination table, the second hot-cutting block is connected to an output end of the hot-cutting tensioning cylinder, the hot-cutting tensioning cylinder is disposed on one side of an other one of the hot-cutting support plates facing to the lamination table, and the separator hot-cutting wire is located below a top of the lamination table.

6. The lamination device capable of simultaneously laminating a plurality of sheets according to claim 1, wherein the battery cell splitting apparatus comprises a splitting base, a base linear module disposed at the top of the rack, a plurality of splitting fixtures, and a splitting mechanism, the splitting base is disposed at a top of the base linear module, and the plurality of splitting fixtures are successively arranged at intervals from left to right; and
each of the plurality of splitting fixtures comprises a fixture mounting plate disposed at a top of the splitting base, a lower pressure mounting seat, an upper pressure mounting seat, and two splitting lifting cylinders, the lower pressure mounting seat is disposed at a top of the fixture mounting plate, a plurality of first clearance slots are disposed at a top of the lower pressure mounting seat, the plurality of first clearance slots are successively disposed at intervals from front to back, the upper pressure mounting seat is located above the lower pressure mounting seat and opposite to the lower pressure mounting seat, a plurality of second clearance slots are disposed at a bottom of the upper pressure mounting seat, the plurality of second clearance slots are in a one-to-one correspondence with the plurality of first clearance slots, the two splitting lifting cylinders are respectively disposed at the top of the fixture mounting plate, the lower pressure mounting seat is located between the two splitting lifting cylinders, and output ends of the two splitting lifting cylinders are respectively connected to both ends of the upper pressure mounting seat; and
the splitting mechanism comprises two splitting translation linear modules disposed opposite to each other front and back, two splitting lifting linear modules, a splitting mounting plate, and a plurality of splitting hot-cutting wires, the two splitting translation linear modules are respectively disposed at the top of the splitting base, the plurality of splitting fixtures are located between the two splitting translation linear modules, the two splitting lifting linear modules are respectively disposed at tops of the two splitting translation linear modules, the splitting mounting plate is located above the plurality of splitting fixtures, both ends of the splitting mounting plate are respectively connected to the two splitting lifting linear modules, the plurality of splitting hot-cutting wires are located below the splitting mounting plate and are successively disposed at intervals from left to right, a number of the plurality of splitting hot-cutting wires is one less than a number of the plurality of splitting fixtures, each splitting hot-cutting wire is respectively located between every two adjacent splitting fixtures, one end and an other end of the splitting hot-cutting wire are respectively provided with a first splitting block and a second splitting block, the first splitting block is disposed on one side of a first splitting pillar and adjacent to a bottom of the first splitting pillar, a top of the first splitting pillar is disposed at a bottom of the splitting mounting plate, the second splitting block is disposed on one side of a second splitting pillar and adjacent to a bottom of the second splitting pillar, a splitting sliding block is disposed on one side of the second splitting pillar at a position adjacent to a top of the second splitting pillar, the splitting sliding block is slidably disposed on one side of a splitting support plate, a top of the splitting support plate is disposed at the bottom of the splitting mounting plate, a splitting tensioning cylinder is disposed on one side of the splitting support plate, an output end of the splitting tensioning cylinder is connected to the splitting sliding block, and the plurality of splitting fixtures are located between the first splitting pillar and the second splitting pillar.

7. The lamination device capable of simultaneously laminating a plurality of sheets according to claim 6, wherein the discharging manipulator comprises a discharging base disposed at the top of the rack, a discharging translation linear module, a discharging lifting linear module, a discharging motor, a discharging rotating shaft, a claw cylinder, an upper claw set, and a lower claw set; the discharging translation linear module is disposed on one side of the discharging base facing to the battery cell splitting apparatus, the discharging lifting linear module is disposed on one side of the discharging translation linear module facing to the battery cell splitting apparatus, a discharging mounting seat is disposed on one side of the discharging lifting linear module, a discharging mounting plate is disposed on one side of the discharging mounting seat away from the discharging lifting linear module, the discharging motor is disposed at a top of the discharging mounting plate, the discharging rotating shaft runs through a through hole of the discharging mounting plate, one end of the discharging rotating shaft is connected to an output shaft of the discharging motor, an other end of the discharging rotating shaft is connected to a top of a discharging top plate, a discharging side plate is disposed at a bottom of the discharging top plate, the claw cylinder is disposed on one side of the discharging side plate away from the battery cell splitting apparatus, the upper claw set and the lower claw set are opposite to each other up and down, the upper claw set and the lower claw set are located between the discharging side plate and the battery cell splitting apparatus and located below the discharging translation linear module, the upper claw set comprises an upper claw mounting seat and a plurality of upper claws, the upper claw mounting seat is connected to an output end of the claw cylinder, the plurality of upper claws are successively disposed on one side of the upper claw mounting seat facing to the battery cell splitting apparatus at intervals from front to back, the lower claw set comprises a lower claw mounting seat and a plurality of lower claws, the lower claw mounting seat is disposed on one side of the discharging side plate facing to the battery cell splitting apparatus, the plurality of lower claws are successively disposed on one side of the lower claw mounting seat facing to the battery cell splitting apparatus at intervals from front to back and are in a one-to-one correspondence with the plurality of upper claws, the first clearance slots of the plurality of splitting fixtures constitute first avoidance channels, each lower claw respectively corresponds to one of the first avoidance channels, the plurality of second clearance slots of the splitting fixture constitute second avoidance channels, and each upper claw respectively corresponds to one of the second avoidance channels.

8. The lamination device capable of simultaneously laminating a plurality of sheets according to claim 1, wherein each of the positive electrode sheet V-notch punching mechanism and the negative electrode sheet V-notch punching mechanism comprises a punching mounting rack disposed at the top of the rack, a punching die and a punching lifting driving mechanism, the punching die and the punching lifting driving mechanism are located in the punching mounting rack, the punching die comprises an upper punching die plate and a lower punching die plate that are disposed opposite to each other up and down, the lower punching die plate is disposed at a bottom in the punching mounting rack, the lower punching die plate and the upper punching die plate are connected by an extension rod, two V-shaped cutters are respectively disposed on a front side and a rear side of the upper punching die plate, two V-shaped slots respectively corresponding to the two V-shaped cutters are respectively formed in a top of the lower punching die plate, the two V-shaped cutters are respectively configured to cooperate with the two V-shaped slots, the punching lifting driving mechanism comprises a punching motor, a punching reducer, a punching synchronous belt assembly, a punching rotating shaft and a punching connecting rod, a punching mounting seat is disposed at a top of the punching mounting rack, the punching motor is disposed on the punching reducer, an output end of the punching motor is connected to an input end of the punching reducer, the punching reducer is disposed at one end of the punching mounting seat, one end of the punching rotating shaft is connected to an output end of the punching reducer by the punching synchronous belt assembly, an other end of the punching rotating shaft is rotatably disposed in a through hole of the punching mounting rack and connected to a roller bearing follower, a center of the roller bearing follower is located on one side of an axis of the punching rotating shaft, the roller bearing follower cooperates with a rectangular hole of a punching connecting plate, a punching mounting plate is slidably disposed on one side of the punching mounting seat, the punching connecting plate is disposed on one side of the punching mounting plate facing to the punching mounting seat, one end of the punching connecting rod is disposed at a bottom of the punching mounting plate, and an other end of the punching connecting rod runs through a through hole in the top of the punching mounting rack and is connected to a top of the upper punching die plate.

9. The lamination device capable of simultaneously laminating a plurality of sheets according to claim 7, wherein the lamination table comprises a lamination base disposed at the top of the lamination mounting plate, two lamination supporting plates disposed side by side in front and back, a lamination base plate, and two filling assemblies, the two lamination supporting plates are interconnected, two lamination support plates disposed at intervals front and back are disposed at a bottom of each of the two lamination supporting plates, the two lamination support plates are disposed at a top of the lamination base plate, two lamination connecting plates are disposed at a bottom of the lamination base plate, the two lamination connecting plates are respectively connected to lamination connecting columns at a top of the lamination base, a plurality of run-through holes running through a top and the bottom of the lamination supporting plate are formed in the lamination supporting plate, the plurality of run-through holes are successively disposed at intervals from left to right, the plurality of run-through holes respectively correspond to the plurality of lower claws of the discharging manipulator, the two filling assemblies respectively correspond to the two lamination supporting plates, each of the two filling assemblies comprises a plurality of filling blocks, a filling mounting plate and two filling cylinders, the plurality of filling blocks are in a one-to-one correspondence with the plurality of run-through holes of a corresponding one of the two lamination supporting plates, each of the plurality of filling blocks cooperates with a corresponding one of the plurality of run-through holes, a plurality of avoidance slots respectively corresponding to the plurality of run-through holes are formed in a top of each of the lamination support plates, the plurality of avoidance slots are respectively in communication with the corresponding run-through holes, the filling mounting plate is located between the two lamination support plates of the corresponding one of the two lamination supporting plates and located between the lamination base plate and the corresponding one of the two lamination supporting plates, bottoms of the plurality of filling blocks are respectively connected to a top of the filling mounting plate, the two filling cylinders are respectively disposed at the bottom of the lamination base plate, and an output end of each of the filling cylinder passes through a via hole of the lamination base plate and is connected to a bottom of the filling mounting plate.

10. The lamination device capable of simultaneously laminating a plurality of sheets according to claim 1, further comprising a gluing apparatus, a gluing manipulator, a hot-pressing feeding manipulator, a hot-pressing discharging manipulator, a hot-pressing apparatus, a two-dimensional code gluing apparatus, a transfer manipulator, a testing apparatus and a discharging conveyor line that are disposed at the top of the rack, wherein the gluing manipulator is located on the right of the discharging manipulator, the gluing apparatus is located in front of the discharging manipulator and the gluing manipulator, the gluing apparatus is configured to glue a front side, a rear side, a left side and a right side of each of the plurality of single battery cells, the discharging manipulator is further configured to convey the plurality of single battery cells on the battery cell splitting apparatus to the gluing manipulator together, the gluing manipulator is configured to convey the plurality of single battery cells on the discharging manipulator to the gluing apparatus successively, the hot-pressing apparatus is located in front of the gluing apparatus, the hot-pressing feeding manipulator is located between the gluing apparatus and the hot-pressing apparatus, the two-dimensional code gluing apparatus, the testing apparatus and the discharging conveyor line are successively disposed from left to right and are located in front of the hot-pressing apparatus, the hot-pressing discharging manipulator is located on the left of the hot-pressing apparatus and the two-dimensional code gluing apparatus, the transfer manipulator is located between the two-dimensional code gluing apparatus and the testing apparatus, the hot-pressing apparatus is configured to hot-press the plurality of single battery cells, the hot-pressing feeding manipulator is configured to convey the plurality of single battery cells on the gluing apparatus to the hot-pressing apparatus, the two-dimensional code gluing apparatus is configured to perform two-dimensional gluing on the plurality of single battery cells, the testing apparatus is configured to perform Hi-pot testing and thickness testing on the plurality of single battery cells, the discharging conveyor line is configured to convey the plurality of single battery cells to a discharging station, the hot-pressing discharging manipulator is configured to convey the plurality of single battery cells on the hot-pressing apparatus to the two-dimensional code gluing apparatus, the transfer manipulator is configured to transport the plurality of single battery cells on the two-dimensional code gluing apparatus to the testing apparatus and configured to convey the plurality of single battery cells on the testing apparatus to the discharging conveyor line.
